(19) Europäisches Patentamt
European Patent Office
Office européen des brevets

(11) EP 2 805 151 B1

(12) **EUROPÄISCHE PATENTSCHRIFT**

(45) Veröffentlichungstag und Bekanntmachung des Hinweises auf die Patenterteilung:
**06.04.2016 Patentblatt 2016/14**

(21) Anmeldenummer: **13701239.9**

(22) Anmeldetag: **18.01.2013**

(51) Int Cl.:
***G01N 21/64*** *(2006.01)* ***G01N 21/80*** *(2006.01)*

(86) Internationale Anmeldenummer:
**PCT/EP2013/050991**

(87) Internationale Veröffentlichungsnummer:
**WO 2013/107895 (25.07.2013 Gazette 2013/30)**

(54) **OPTODE ZUR BESTIMMUNG VON CHEMISCHEN PARAMETERN**

OPTODE FOR DETERMINING CHEMICAL PARAMETERS

OPTODE POUR DETERMINER DES PARAMETRES CHIMIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.01.2012 EP 12151830**

(43) Veröffentlichungstag der Anmeldung:
**26.11.2014 Patentblatt 2014/48**

(73) Patentinhaber: **Universität Potsdam**
**14469 Potsdam (DE)**

(72) Erfinder:
- **STEINBRÜCK, Dörte**
  **14542 Werder (DE)**
- **SCHMÄLZLIN, Elmar**
  **14473 Potsdam (DE)**
- **LÖHMANNSRÖBEN, Hans-Gerd**
  **14476 Potsdam (DE)**

(74) Vertreter: **Müller & Schubert**
**Patentanwälte**
**Schlüterstrasse 37**
**10629 Berlin (DE)**

(56) Entgegenhaltungen:
**WO-A1-94/17388 WO-A1-02/066162**
**WO-A2-01/75450 US-A1- 2008 286 154**

- **CARSTEN HILLE ET AL: "Time-domain fluorescence lifetime imaging for intracellular pH sensing in living tissues", ANALYTICAL AND BIOANALYTICAL CHEMISTRY, SPRINGER, BERLIN, DE, Bd. 391, Nr. 5, 16. Mai 2008 (2008-05-16), Seiten 1871-1879, XP019621521, ISSN: 1618-2650**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 805 151 B1

**Beschreibung**

Gegenstand der vorliegenden Erfindung ist eine Optode zur Bestimmung von chemischen Parametern einer Probe, sowie ein Verfahren zur Bestimmung chemischer Parameter unter Verwendung der erfindungsgemäßen Optode.

Unter chemischen Parametern einer Probe werden im Zusammenhang der vorliegenden Erfindung der pH-Wert und Stoffkonzentrationen verstanden.

Chemische Sensoren sind Komponenten, welche ein analytisch auswertbares Signal aus einer chemischen Information bereitstellen.

Optoden sind Sonden, die chemische Substanzen bzw. chemische Parameter optisch mit Hilfe eines Sensorfarbstoffs nachweisen. Zum Nachweis wird die Tatsache ausgenutzt, dass sich die optischen Eigenschaften von Sensorfarbstoffen, beispielsweise deren Lumineszenz, in Gegenwart der nachzuweisenden Substanz bzw. des chemischen Parameters ändern. Insbesondere bekannt sind Optoden, bei denen der Sensorfarbstoff direkt oder in einer Matrix auf einem Lichtwellenleiter fixiert ist.

Die Bestimmung von chemischen Parametern wie pH-Wert und der Konzentration von Sauerstoff, Kohlendioxid, Ammoniak, Metallionen wie Natriumionen, Kaliumionen und Calciumionen in einer Probe ist in vielen Bereichen von großer Bedeutung. So ist die Konzentration von Sauerstoff in der Natur ausschlaggebend für die Entstehung von Leben und spielt bei vielen biologischen Prozessen eine wichtige Rolle. Der pH-Wert entscheidet über die Funktionen von Enzymen und Rezeptoren und somit über viele physiologische Prozesse, wie der Signalleitung entlang von Nervenzellen und die Aufnahmefähigkeit von Sauerstoff oder Kohlendioxid in Gewebe oder Blut, bei Pflanzen und Tiere. Diese chemischen Parameter bestimmen somit Gesundheit und Aktivität von Lebewesen. Des Weiteren geben die Parameter Auskunft über die Korrosionskraft von Lösungen, zum Beispiel in technischen Anlagen, und beeinflussen somit die ablaufenden Prozesse und die Stabilität der Materialien. Schnelle, unkomplizierte und verlässliche Analysemethoden werden daher für vielfältige Anwendungen benötigt.

Das Spektrum möglicher Anwendungsbereiche reicht von Bestimmungen in einzelnen Zellen über Lebensmittel- und Bioreaktorkontrolle bis hin zur Untertage- und Prozessüberwachung von technischen Anlagen, wie zum Beispiel Geothermie- oder Erdölbohrungen.

Bei den biologischen Anwendungen ist das immense Miniaturisierungpotential optischer Methoden bedeutend. Für die technischen Anwendungen ist die mögliche weite Entfernung im km-Bereich von Mess-Station und der eigentlichen Probe durch Verwendung von optischen Fasern (= Lichtwellenleiter) ein großer Vorteil.

Im Stand der Technik sind bereits Optoden zur Bestimmung von pH-Wert und weiteren chemischen Parametern wie der Sauerstoffkonzentration bekannt. Auch wurden bereits Optoden beschrieben, welche die Bestimmung mehrerer chemischer Parameter gestatten.
Bei der Bewertung der Einsetzbarkeit von Optoden muss berücksichtigt werden, für welche optischen Messverfahren sich die Optoden eignen. Hierbei ist insbesondere zu unterscheiden, ob sich die Optoden sowohl für stationäre als auch für zeitaufgelöste optische Verfahren eignen.

Mittels stationärer Verfahren kann die Änderung der Lumineszenzintensität eines Sensorfarbstoffs mit sich ändernder Analytkonzentration festgestellt werden. Dazu werden die Sensorfarbstoffe möglichst im Maximum der Absorptionsbande angeregt und Emissionsspektren bei verschiedenen Analytkonzentrationen gemessen. Die Auswertung der Lumineszenzintensität bei bestimmten Emissionswellenlängen ergibt eine von der Konzentration des Analyten abhängige Funktion.

Bei den zeitaufgelösten Methoden (Time Domain Spectroscopy; TD-S) wird eine weitere spezifische Größe des Farbstoffes, die Abklingzeit, ermittelt. Als Abklingzeit wird die Zeitspanne bezeichnet, nach welcher der Wert der Lumineszenzintensität auf einen bestimmten Teil ihres Anfangswertes abgesunken ist. Der Begriff "Lumineszenz" wird im Zusammenhang der vorliegenden Erfindung als Oberbegriff für Fluoreszenz und Phosphoreszenz verwendet.

Ein großer Vorteil der Abklingzeitbestimmung ist die weitgehende Unabhängigkeit von der Farbstoffkonzentration innerhalb der Sensormatrix und von Intensitätsschwankungen der Anregungsquelle. Zeitaufgelöste Methoden liefern zusätzlich zur stationären Intensitätsänderung die zeitabhängige Abnahme der Lumineszenzintensität nach Anregung mit einem kurzen Lichtpuls.

Zu den Verfahren, in welchen die Abklingzeit eines Sensorfarbstoffs ermittelt wird, gehört die Phasenmodulationsspektroskopie. Diese erlaubt Echtzeitmessungen aufgrund schneller Ansprechzeiten der Sensoren ($\leq$ 10 s) und einer schnellen Messtechnik. Weiterhin genügen geringe Signalintensitäten, ohne dass dies Auswirkungen auf die Genauigkeit der Messung hat.

Die optische Bestimmung chemischer Parameter wurde innerhalb der letzten 30 Jahre etabliert. Der erste wissenschaftliche Artikel zur faseroptischen pH-Wert-Messung erschien 1980 (S.R. Goldstein, J. Peterson, R.V. Fitzgerald, A miniature fiber optic pH sensor for physiological use, Journal of Biomechanical Engineering 1980, 102 (2), 141-146). Erste kommerziell erhältliche faseroptische Systeme zur Bestimmung von chemischen Parametern pH-Werten oder Sauerstoffkonzentrationen gibt es seit 1992 (Ocean Optics), und weitere folgten: Sentronic (1993), Presens (1997), Pyro Science und Colibri-Photonics (2011).

Neben der Bestimmung eines einzelnen chemischen Parameters ist in verschiedenen Bereichen auch die Bestimmung von zwei oder weiteren Parametern erwünscht. Insbesondere ist die simultane Bestimmung mehrerer chemischer Parameter von großem Interesse. Durch die Möglichkeit der Bestimmung mehrerer Parameter mit Hilfe einer Messung wird die Analytik nicht nur kostengünstiger sondern auch schneller. Des Weiteren wird weniger Probenmaterial benötigt, was besonders bei medizinischen Anwendungen von Bedeutung ist.

Im Stand der Technik sind bereits Optoden für die Bestimmung mehrerer chemischer Parameter bekannt. So beschreiben N.B. Borchert, G.V. Ponomarev, J.P. Kerry und D.B. Papkovsky, in "O2/pH multisensor based on one phosphorescent dye", Anal. Chem. 2011, 83, 18-22, die simultane Messung von Sauerstoff und pH-Wert mittels einer Optode. Die in der Veröffentlichung beschriebene Optode umfasst einen Metalloporphyrin-Farbstoff, der in eine Polymermembran eingebettet ist. Dieser Sensorfarbstoff wurde derart funktionalisiert, dass er sowohl für die Bestimmung von Sauerstoff als auch für die Bestimmung des pH-Werts verwendet werden kann. Eingebunden wird dieser bifunktionale Sensorfarbstoff in eine Matrix aus Polyvinylchlorid und Bis-(2-Ethylhexyl)sebacat. In der genannten Publikation wird diskutiert, dass die Verwendung mehrerer Sensorfarbstoffe in einem Sensor zu Wechselwirkungen und einem Überlappen der geeigneten Spektralbereiche führen kann. Weiterhin wird auf die hohen Herstellungskosten von Optoden mit mehreren Sensorfarbstoffen verwiesen. Es wird nicht offenbart, dass der pH-Wert mit der offenbarten Optode über die Ermittlung der Abklingzeit des Sensorfarbstoffs ermittelt wird oder ermittelt werden kann. Die von Borchert et al. beschriebenen Multioptoden ermöglichen die Messung von pH-Werten im Bereich von pH 5-9. Die Messung niedrigerer pH-Werte wird nicht offenbart.

Eine Optode, welche zur Bestimmung des pH-Wertes, und nach Aufbringen einer weiteren Matrix, auch zur Bestimmung von Kohlendioxid und Ammoniak geeignet ist, beschreiben Nivens et al. (D.A. Nivens et al., "Multilayer sol-gel membranes for optical sensing applications: single layer pH and dual layer CO2 and NH3 sensors", Talanta 2002, 58, 543-550.

Die Messungen von pH-Wert und $CO_2$- bzw. $NH_3$-Konzentration erfolgen erst nach Modifizierung des Sensors. Zur Messung des pH-Wertes wird ein Sensor verwendet, welcher ein Basen-katalysiertes Sol-Gel umfasst, in welches der Indikator Hydroxypyrentrisulfonsäure eingebracht wurde. Dieser Sensor kann zur Bestimmung des pH-Wertes verwendet werden. Sollen mit diesem Sensor $CO_2$- bzw. $NH_3$-Konzentrationen ermittelt werden, wird über die Sol-Gel-Schicht des pH-Sensors eine weitere Schicht aufgetragen, die eine hydrophobe Sol-Gelschicht ist. Hiermit sollen Wechselwirkungen verhindert werden. Eine simultane Bestimmung mehrerer chemischer Parameter wird in der genannten Veröffentlichung nicht offenbart. Weiterhin wird nicht die Messung der Abklingzeit der Lumineszenz des pH-sensitiven Farbstoffs offenbart.

Insgesamt haben die Erfinder festgestellt, dass die pH-sensitiven Optoden des Standes der Technik auf der Messung der pH-Wert-abhängigen stationären Fluoreszenzintensität beruhen (siehe: J. Lin, "Recent development and applications of optical and fiber-optic pH sensors", Trends in analytical chemistry 2000, 19, 541-551). Es wird im Stand der Technik keine optische Sonde beschrieben, welche einen in einer Matrix immobilisierten pH-sensitiven Farbstoff umfasst und welche eine pH-Messung über die Bestimmung der Abklingzeit der Lumineszenz des pH-sensitiven Farbstoffs ermöglicht.

Die direkte Messung des pH-Wertes über die Abklingzeit eines pH-sensitiven Farbstoffes wurde bisher nur mit gelösten Farbstoffen gezeigt (C. Hille et al., "Time-domain fluorescence lifetime imaging for intracellular pH sensing in living tissues"; H.-J. Lin et al., "Lifetime-based pH sensors: indicators for acidic environments", Analytical Biochemistry 1999, 269, 162-167).

In diesem Zusammenhang ist jedoch unbedingt zwischen einem Sensorfarbstoff in Lösung und einem in einer Polymermatrix immobilisierten Sensorfarbstoff zu unterscheiden. Bei der Immobilisierung eines Sensorfarbstoffs in einer Polymermatrix können Wechselwirkungen entstehen, welche die optischen Eigenschaften des Sensorfarbstoffs verändern.

Die internationale Patentanmeldung WO01/75450 beschreibt die Messung von verschiedenen Analyten über die Abklingzeit. Dabei werden die Fluoreszenzfarbstoffe in verschiedene Matrixpolymere wie zum Beispiel Silikon-Polyurethane oder Polyetherketone eingebettet.

Bei der Herstellung von pH-Optoden werden üblicherweise pH-sensitive Farbstoffe in wasserpermeablen Polymeren immobilisiert. Hierbei treten bei den bisher bekannten Kombinationen von Polymermatrix und Sensorfarbstoff Änderungen an den optischen Eigenschaften der pH-sensitiven Farbstoffe auf, welche die Verwendbarkeit der entsprechenden Optoden stark einschränken. Diese Veränderung der optischen Eigenschaften haben zur Folge, dass bei diesen Optoden des Standes der Technik die Änderung der Abklingzeit der Fluoreszenz des pH-sensitiven Farbstoffs in Abhängigkeit vom pH-Wert verloren geht. Eine direkte Messung des pH-Wertes über die Abklingzeit eines pH-sensitiven Farbstoffes wird damit unmöglich.

Dies ist insofern nachteilig, weil im Vergleich zur Messung der Intensität, die Messung der Abklingzeit den wesentlichen Vorteil bietet, dass die Abklingzeit weitestgehend unabhängig ist von der Farbstoffkonzentration innerhalb der Sensormatrix und von Intensitätsschwankungen der Anregungsquelle. Weiterhin ist es beim Verlust der Änderung der Abklingzeit mit dem pH-Wert dann nicht möglich spezielle spektroskopische Verfahren, wie die Phasenmodulationsspektroskopie anzuwenden.

Auch besitzen die dualen Optoden des Standes der Technik zur Messung des pH-Wertes und der Sauerstoffkonzentration einen pH-Messbereich zwischen pH 5 bis pH 7,5. Durch diesen Messbereich wird die Verwendbarkeit dieser Optoden eingeschränkt.

Aufgabe der vorliegenden Erfindung ist es, die Nachteile des Standes der Technik zu beseitigen.

Die Aufgabe der vorliegenden Erfindung ist es deshalb, Optoden bereitzustellen, bei welchen die Abklingzeit der Lumineszenz eines pH-sensitiven Farbstoffs mit dem pH-Wert auch nach Immobilisierung des Sensorfarbstoffs in einer Polymermatrix bestehen bleibt.

Weiterhin ist es Aufgabe der vorliegenden Erfindung, Optoden bereitzustellen, welche neben der Bestimmung des pH-Wertes die Bestimmung weiterer chemischer Parameter gestatten, insbesondere auch als simultane Messung. Wobei die Optode zur ortsaufgelösten Echtzeitmessung verwendbar sein soll.

Es ist auch die Aufgabe der vorliegenden Erfindung eine Optode zur simultanen Bestimmung des pH-Wertes und der Sauerstoffkonzentration bereitzustellen, welche Messungen in pH-Wert-Bereichen kleiner als 5 ermöglichen.

Die Aufgabe der vorliegenden Erfindung wird gelöst durch die Merkmale der unabhängigen Ansprüche 1 und 15. Vorteilhafte Ausführungen sind in den Unteransprüchen angegeben.

Die Aufgabe der Erfindung wird gelöst durch die Bereitstellung einer Optode zur Bestimmung von chemischen Parametern einer Probe, wobei die Optode eine Polymermatrix umfasst, die sulfoniertes Polyetheretherketon (SPEEK) umfasst, in welcher ein Sensorfarbstoff immobilisiert ist oder mehrere Sensorfarbstoffe immobilisiert sind, wobei mindestens einer der immobilisierten Sensorfarbstoffe pH-sensitiv ist.

Insbesondere vorteilhaft ist eine Optode bei welcher in dem sulfonierten Polyetheretherketon (SPEEK) mindestens ein weiterer Sensorfarbstoff immobilisiert ist.

Bevorzugt ist auch eine erfindungsgemäße Optode, die mindestens eine weitere Polymermatrix umfasst, in welcher mindestens ein weiterer Sensorfarbstoff immobilisiert ist.

Erfindungsgemäß bevorzugt ist, dass bei der erfindungsgemäßen Optode der mindestens eine weitere Sensorfarbstoff ausgewählt ist aus Sauerstoff-sensitiven, Halogenidionen-sensitiven, Natriumionen-sensitiven, Kaliumionen-sensitiven, pH-sensitiven und Calciumionen-sensitiven Farbstoffen.

Bevorzugt ist eine Optode, bei welcher der pH-sensitive Sensorfarbstoff ausgewählt ist aus 4-{4-[4-(Dipentylamino)phenyl]-1,3-butadienyl}-1-(4-sulfobutyl)pyridiniumhydroxid (RH421, Bis-(1,3-Dibutylbarbitursäure)-trimethinoxonol (Dibac$_4$(3)), 6-Carboxyfluorescein (CF), 5(6)-Carboxy-2',7'-dichlorfluorescein (Cl-CF) und 8-Hydroxy-1,3,6-pyrentrisulfonsäure-Trinatriumsalz (HPTS).

Insbesondere vorteilhaft ist eine Optode, bei welcher der Sauerstoff-sensitive Farbstoff ausgewählt ist aus Pt(II)meso-Tetra(pentafluorphenyl)porphyrin (Pt-TPFPP), Pd(II)meso-Tetra(pentafluorphenyl)porphyrin und Ruthenium(II)-Tris(4,7-diphenyl-1,10-phenanthrolin)perchlorat (Ru-pCl) und Ruthenium(II)-Tris(4,7-diphenyl-1,10-phenanthrolin)dichlorid;

der Halogenidionen-sensitive Farbstoff ausgewählt ist aus den Chloridionensensitiven Farbstoffen N,N'-Dimethyl-9,9'-bisacridiniumnitrat (Lucigenin), 6-Methoxy-N-(3-sulfopropyl)chinolinium (SPQ) und N-(Ethoxycarbonylmethyl)-6-methoxychinoliniumbromid (MQAE);

der Natriumionen-sensitive Farbstoff ausgewählt ist aus N,N'-[1,4,10-Trioxa-7,13-diazacyclopentadecan-7,13-diylbis(2,5-dimethoxy-4,1-phenylen)]bis[3',6'-bis(acetyloxy)-2',7'-dichlor-3-oxo-spiro[isobenzofuran-1(3H),9'-[9H]xanthen]-5-carboxamid, (Sodium Green ®, Molecular Probes, CAS Registry-Nummer 159952-49-5) und N-(4-[1-(7-Diethylaminocumarin-3-yl)-1H-1,2,3-triazol-4yl]phenylaza-18-Krone-6-Ether; der Kaliumionen-sensitive Farbstoff N-(2-Methoxyethoxy)phenylaza-18-Krone-6)-4-(cumarinyl)-1H-1,2,3-triazol ist,

und

der Calciumionen-sensitive Farbstoff ausgewählt ist aus der Calciumionen-sensitive Farbstoff ausgewählt ist aus N-[2-[(acetyloxy)methoxy]-2-oxoethyl]-N-[4-[[[3',6'-bis(acetyloxy)-2',7'-difluor-3-oxospiro[isobenzofuran-1(3H),9'-[9H]xanthen]-5-yl]carbonyl]amino]-2-[2-[2-[bis[2-[(acetyloxy)methoxy]-2-oxoethyl]amino]phenoxy]ethoxy]phenyl]-glycin-(acetyloxy)methyl ester (Oregon Green™ 488 BAPTA-1),

N-[2-[2-[2-[bis(carboxymethyl)amino]-5-[[(2',7'-difluor-3',6'-dihydroxy-3-oxospiro[isobenzofuran-1(3H),9'-[9H]xanthen]-5-yl)carbonyl]amino]phenoxy]ethoxy]-6-fluorphenyl]-N-(carboxymethyl)-glycinhexakaliumsalz (Oregon Green™ 488 BAPTA-6F) und N-[2-[2-[2-[bis(carboxymethyl)amino]-5-[[(2',7'-difluor-3',6'-dihydroxy-3-oxospiro[isobenzofuran-1(3H),9'-[9H]xanthen]-5-yl)carbonyl]amino]phenoxy]ethoxy]-5-nitrophenyl]-N-(carboxymethyl)-glycinhexakaliumsalz (Oregon Green™ 488 BAPTA-5N).

Weiterhin bevorzugt ist eine Optode, bei welcher das Polymer der mindestens einen weiteren Polymermatrix ausgewählt ist aus Poly(2,2,2-trifluorethylmethacrylat (P1), Poly(2-hydroxypropylmethacrylat) (PHPMA), Poly(2-hydroxyethylmethacrylat) (PHEMA), Polyurethan (PU), Polyvinylpyrrolidon (PVP), Poly(1-vinylpyrrolidon)-co-styrol (PVPS), Polyvinylchlorid (PVC), Polyacrylnitri-Polyacrylamid-Blockcopolymer (HYPAN HN 80) und Polystyrol.

Erfindungsgemäß besonders bevorzugt ist eine Optode, bei welcher der pH-sensitive Farbstoff 6-Carboxyfluorescein (CF) oder 5(6)-Carboxy-2',7'-dichlorfluorescein (Cl-CF) ist, die weitere Polymermatrix eine Poly(2,2,2-trifluorethylmethacrylat)-Matrix ist und der Sauerstoff-sensitive Farbstoff Pt(II)meso-Tetra(pentafluorphenyl)porphyrin oder Pd(II)meso-Tetra(pentafluorphenyl)porphyrin ist.

Vorteilhaft ist eine Optode, welche zwei weitere Polymermatrizes umfasst, wobei die erste weitere Polymermatrix das Polymer Poly(2-hydroxypropylmethacrylat) umfasst, in welchem der Chloridionen-sensitive Farbstoff N,N'-Dimethyl-9,9'-bisacridiniumnitrat immobilisiert ist, und die zweite, weitere Polymermatrix das Polymer Poly(2,2,2-trifluorethylmethacrylat) umfasst, in welchem der Sauerstoff-sensitive Farbstoff Pt(II)meso-Tetra(pentafluorphenyl)-porphyrin (Pt-TPFPP) oder Pd(II)meso-Tetra(pentafluorphenyl)porphyrin (Pd-TPFPP) immobilisiert ist.

Bevorzugt ist auch eine erfindungsgemäße Optode, bei welcher auf der Polymerschicht, in welcher der Sensorfarbstoff immobilisiert ist oder zwischen den Polymerschichten, in welchen einer oder mehrere Sensorfarbstoffe immobilisiert sind, eine weitere Schicht oder mehrere weitere Schichten aufgebracht sind, wobei kein Sensorfarbstoff in dieser mindestens einen weiteren Trennungsschicht immobilisiert ist.

Erfindungsgemäß bevorzugt ist eine Optode, welche mindestens ein Substrat umfasst, auf welchem die eine oder die mehreren Polymermatrizes und die darin immobilisierten Sensorfarbstoffe fixiert sind.

Besonders vorteilhaft ist eine Optode bei welcher das mindestens eine Substrat ausgewählt ist aus Glassubstraten oder Polymersubstraten.

Insbesondere vorteilhaft ist eine Optode, bei welcher das Substrat aus einer Polymermatrix gebildet wird, in welcher ein Sensorfarbstoff immobilisiert ist.

Erfindungsgemäß vorteilhaft ist eine Ausführungsform, bei welcher die mit einem oder mehreren Lichtleitern verbunden ist oder Teil eines Lichtleiters ist.

Die Aufgabe der vorliegenden Erfindung wird weiterhin durch Verfahren zur Bestimmung des pH-Werts einer Probe gelöst, bei welchem man die erfindungsgemäße Optode verwendet.

Insbesondere bevorzugt ist ein Verfahren, bei welchem man zusätzlich die Kohlendioxidkonzentration und/oder die Ammoniakkonzentration und/oder die Sauerstoffkonzentration und/oder Halogenidionenkonzentration und/oder die Natriumionenkonzentration und/oder die Kaliumionenkonzentration und/oder die Calciumionenkonzentration der Probe bestimmt und man die Bestimmung der Parameter simultan oder zeitversetzt durchführt.

Besonders bevorzugt ist ein Verfahren, bei welchem man die Bestimmung des Parameters bzw. der Parameter stationär oder zeitaufgelöst durchführt und die Bestimmung des Parameters bzw. der Parameter mittels Mikroskop, CCD-Kamera Reflexionsspektroskopie, Fluoreszenzspektrokopie, Time-Domain-Spectroskopie und/oder Phasenmodulationsspektroskopie durchführt.

Überraschenderweise wurde gefunden, dass Verwendung des sulfonierten Polyetheretherketons (SPEEK) zur Immobilisierung eines pH-senitiven Farbstoffs die optische Bestimmung des pH-Wertes über die Abklingzeit der Lumineszenz des Sensorfarbstoffs gestattet. Anders als in anderen bisher untersuchten Matrizes bleibt die Änderung der Abklingzeit des pH-sensitiven Farbstoffs nach Immobilisierung in SPEEK erhalten. Damit wird die Durchführung zeitaufgelöster optischer Verfahren zur Bestimmung des pH-Werts in Echtzeit möglich.

Die Immobilisierung eines weiteren Sensorfarbstoffs in der SPEEK-Matrix der erfindungsgemäßen Optode ermöglicht die Bestimmung weiterer chemischer Parameter und die auch die Bestimmung des pH-Wertes in unterschiedlichen pH-Bereichen durch die Kombination verschiedener pH-sensitiver Farbstoffe. Dadurch wird der apparative Aufwand im Vergleich zur Verwendung mehrerer Optoden verringert.

Die Immobilisierung eines weiteren Sensorfarbstoffs in einer weiteren Polymermatrix hat den Vorteil, dass neben dem pH-Wert weitere Parameter der Probe mit einer Optode bestimmt werden können. Darüber hinaus kann die weitere Polymermatrix individuell auf den weiteren zu messenden Parameter und den immobilisierten Sensorfarbstoff angepasst werden kann. So erfordert beispielsweise die Bestimmung einer Gaskonzentration die Gaspermeabilität der Polymermatrix. Weiterhin kann es je nach Sensorfarbstoff vorteilhaft sein, ein in der Polarität angepasstes Polymermaterial zu verwenden.

Vorteilhaft ist weiterhin, dass mit der erfindungsgemäßen Optode eine Vielzahl von Parametern neben dem pH-Wert bestimmt werden kann, wodurch der apparative Aufwand gegenüber der Einzelmessung der Parameter verringert wird. Gerade bei der Untersuchung von biologischen Proben ist das Miniaturisierungspotenzial optischer Vorrichtungen vorteilhaft, was durch die Verwendung nur einer Optode zur simultanen Bestimmung mehrerer Parameter noch weiter unterstützt wird.

Die Möglichkeit der Immobilisierung verschiedener pH-sensitiver Sensorfarbstoffe in der erfindungsgemäßen Optode ermöglicht die Messung in unterschiedlichen pH-Bereichen unter Beibehaltung der erfindungsgemäßen Vorteile. Durch Immobilisierung unterschiedlicher weiterer Sensorfarbstoffe kann die erfindungsgemäße Optode in ihrer Empfindlichkeit und ihrem Messbereich auf unterschiedliche Stoffkonzentrationen angepasst werden.

Die Vielzahl der als weitere Polymermatrix verwendbaren Polymere ermöglicht eine Anpassung der erfindungsgemäßen Optode an die zu messenden Parameter und die verwendeten Sensorfarbstoffe. Hierdurch wird eine individuelle Abstimmung der Optode auf das Anwendungsgebiet möglich.

Je nach Einsatzbereich kann die Optode mit einem geeigneten Träger kombiniert werden. Hierbei können Träger aus verschiedensten Materialien verwendet werden, beispielsweise Träger aus Glas oder Polymermaterialien. Werden Träger aus Glas verwendet, so kann der Träger beispielsweise ein planarer Glaskörper wie ein Objektträger sein und das Optodenmaterial kann als Film auf dem Träger angeordnet sein.

Bei bestimmten Anwendungen kann es vorteilhaft sein, die die Sensorfarbstoffe tragenden Polymermatrizes durch eine oder mehrere Materialschichten (Trennschicht) voneinander zu trennen oder gegen bestimmte Medien zu isolieren. Diese Trennschichten tragen keine Sensorfarbstoffe. Beispielsweise können solche Trennschichten bei der Messung von Kohlendioxid- und Ammoniakkonzentrationen mit der erfindungsgemäßen Optode vorteilhaft sein. Hierbei kann auf der SPEEK/pH-Sensorfarbstoff-Optode eine Materialschicht aufgebracht werden, die gaspermeabel aber wasserundurchlässig ist. Die Bestimmung der Kohlendioxid- und Ammoniakkonzentration kann dann mittels der Messung des pH-Wertes erfolgen, ohne dass eine Verfälschung des Ergebnisses durch nicht gasförmige Medien, also beispielsweise aus Flüssigkeiten, aus der Umgebung erfolgt.

Werden als Träger Lichtleiter wie eine Glasfaser verwendet, so kann das Optodenmaterial beispielsweise auf der Spitze einer Faser des Lichtleiters angeordnet sein. Es ist jedoch auch bevorzugt, dass das Optodenmaterial auf mehreren Fasern eines Lichtleiters angeordnet ist, so dass Messungen an verschiedenen Positionen einer Probe möglich sind.

Umfasst die erfindungsgemäße Optode mehr als ein Polymermaterial, in welchem ein Sensorfarbstoff immobilisiert ist oder mehrere Sensorfarbstoffe immobilisiert sind, so können die Polymer/Farbstoff-Schichten in beliebiger Reihenfolge auf dem Träger aufgebracht werden.

Die erfindungsgemäße Optode zur Bestimmung mehrerer Parameter kann auch derart auf einem Träger aufgebracht werden, dass das Optodenmaterial nicht in Schichten übereinander auf einem Träger aufgebracht wird, sondern nur in räumlicher Nähe zueinander. Räumliche Nähe bedeutet hierbei, dass die Anordnung eine simultane Messung beider Parameter ermöglicht. In einer Ausführungsform der vorliegenden Erfindung wird dazu SPEEK mit darin immobilisrtem Sensorfarbstoff auf die Faser aufgebracht und neben dieses Optodenmaterial wird die weitere Polymermatrix auf der Faser angeordnet. Hierbei kann es zu einer Überlappung der Schichten kommen oder das Anbringen der weiteren Polymermatrix ohne Überlappung erfolgen.

In einer weiteren Ausführungsform werden bevorzugt die Enden einer Glasfaser mit den Optodenmaterial-Komponenten beschichtet, so dass zum Beispiel eine Faser die SPEEK-Matrix zur pH-Wert-Bestimmung trägt und eine oder mehrere weitere Fasern die Polymermatrizen für die Bestimmung des weiteren Parameters oder der weiteren Parameter tragen.

Auch bevorzugt ist die Verwendung von Polymermaterialien als Träger des Optodenmaterials. Hierzu kann das Optodenmaterial auf einen Polymerträger, beispielsweise in Form eines Polymerpartikels wie ein Polymerkügelchen aufgebracht werden.

Bevorzugt ist auch, dass eine Optodenmaterial-Komponente, also eine Polymermatrix mit immobilisiertem Sensorfarbstoff selbst als Träger für weitere Polymer/Sensorfarbstoff-Kombinationen dient. Dies ist besonders dann vorteilhaft, wenn für die entsprechenden Anwendungen faseroptische Systeme ungeeignet sind, beispielsweise weil die zu untersuchenden Systeme geschlossen sind und ein Einbringen des Fasersensors unmöglich ist. In diesem Fall kann die Optode in Form eines Polymerpartikels direkt in die Probe eingebracht werden. Der zu untersuchende Prozess kann von außen durch optisches Abfragen der kugelförmigen Sonde verfolgt werden. Das optische Signal kann hierbei mittels eines Mikroskops oder durch optische Fasern erfasst werden.

Nachfolgend werden bevorzugte Ausführungsbeispiele der vorliegenden Erfindung erläutert. In diesem Zusammenhang werden allgemeine und spezielle Verfahren beschrieben.
Unter dem nachfolgend verwendeten Begriff Optodenmaterial sind im Zusammenhang der vorliegenden Erfindung die Polymermatrix/Sensorfarbstoff-Kombinationen der erfindungsgemäßen Optode zu verstehen.

## Verwendete Sensorfarbstoffe, Polymere und Hilfsstoffe

Folgende Sensorfarbstoffe, Polymere und Hilfsstoffe wurden in den nachfolgend beschriebenen Ausführungsbeispielen verwendet. Die weiteren Polymere und Sensorfarbstoffe sind im Handel erhältlich.
In Klammern werden die verwendete Abkürzung, die Bezugsquelle und ggf. der Reinheitsgrad angegeben. Wenn die Registry-Nummer von Chemical Abstracts Services bekannt ist, wird diese aufgeführt.

## Polymere und Hilfsstoffe

### Sulfoniertes Poly(etheretherketon) (SPEEK)

Das sulfonierte Polyetheretherketon (SPEEK) wurde am Fraunhofer-Institut für Grenzflächen und Bioverfahrens-technik IGB, Stuttgart hergestellt. Siehe dazu K.S. Roelofs et al. "Behavior of sulfonated poly(ether ether ketone) in ethanol-water systems", J. of Applied Polymer Science 2009, 111, 2998-3009, K.S. Roelofs et al., "Sulfonated poly(ether ether ketone)-based silica nanocomposite membranes for direct ethanol fuel cellls", J. of Membrane Science 2010, 346, 215-226.
Die Herstellung für das verwendete sulfonierte Polyetheretherketon kann gemäß Huang et al., "Sulfonation of Poly(Ether

Ether Ketone) (PEEK): Kinetic Stdy and Characterization", J. Applied Polymer Science, 2001, Vol. 82, 2651-2660 erfolgen.

Dazu wird Polyetheretherketon (PEEK) in konzentrierter Schwefelsäure gelöst. Bei Temperaturerhöhung über mehrere Stunden erfolgt die Sulfonierung. Der Sulfonierungsgrad (DS) wird durch die Wahl von Reaktionstemperatur und Reaktionszeit eingestellt. Der Sulfonierungsgrad ist das Verhältnis der Konzentration von sulfonierten PEEK Repeat-Einheiten (siehe Formel I) zur Konzentration der gesamten, anfänglichen Repeat-Einheiten PEEK. Für die Zwecke der vorliegenden Erfindung wurde SPEEK mit einem Sulfonierungsgrad zwischen 40-80 % verwendet.

Formel I:

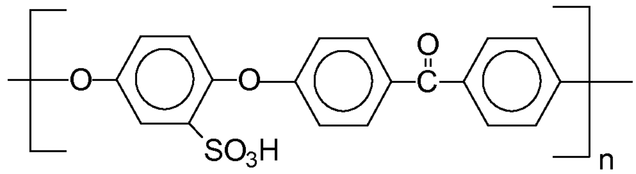

Repeat-Einheit des sulfonierten Polyetheretherketons

Formel 2 zeigt SPEEK mit einem Sulfonierungsgrad unter 100 %.

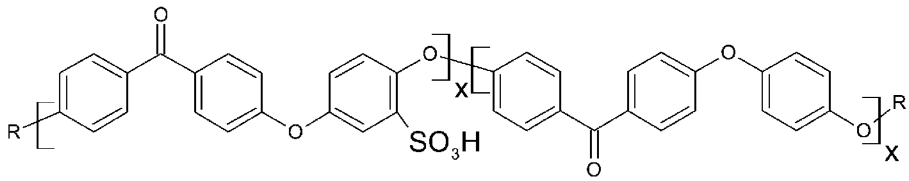

SPEEK

Formel 2

**Polymere und Hilfsstoffe**

1,4-Diazabicyclo(2.2.2)oktan (98%, DABCO, Aldrich, CAS Registry-Nummer 280-57-9);
Ormosil: Ormosil wurde synthetisiert nach I. Klimant et al., "Fast response oxygen micro-optodes based on novel soluble ormosil glasses", Mikrochim. Acta 1999, 131, 35-46,
HYPAN HN 80; Hydrogel, (CAS Registry-Nummer 167290-73-5) Blockcoplymer aus Polyacrylnitril und Polyacrylamid;
Poly(2,2,2-trifluorethylmethacrylat),(P1, Aldrich, CAS Registry-Nummer 54802-79-8);
Poly(2-hydroxypropylmethacrylat) (PHPMA, Aldrich, CAS Registry-Nummer 25703-79-1);
$SiO_2$ (Aerosil R972, Degussa, CAS Registry-Nummer 60842-32-2)

**Sensorfarbstoffe**

- Platin(II)meso-Tetra(pentafluorphenyl)porphyrin (Pt-TPFPP, Frontier Scientific,Inc, CAS Registry-Nummer 109781-47-7);
- Palladium(II)meso-Tetra(pentafluorphenyl)porphyrin (Pd-TPFPP, Frontier Scientific, Inc, CAS Registry-Nummer 72076-09-6);
- Ruthenium(II)-Tris(4,7-diphenyl-1,10-phenanthrolin)perchlorat (Ru-pCl, H.W. Sands, Corp.; CAS Registry-Nummer 75213-31-9)
- Ruthenium(II)-Tris(4,7-diphenyl-1,10-phenanthrolin)dichlorid (Aldrich, CAS Registry-Nummer 36309-88-3);
- 6-Carboxyfluorescein / IUPAC-Name: 3',6'-Dihydroxy-1-oxospiro[2-benzofuran-3,9'-xanthen]-5-carbonsäure (98%, CF, Aldrich, CAS Registry-Nummer 3301-79-9);
- 5(6)-Carboxy-2',7'-dichlorfluorescein (98%) (Cl-CF, Aldrich, CAS Registry-Nummer 111843-78-8);
- 8-Hydroxy-1,3,6-pyrentrisulfonsäure-Trinatriumsalz (HPTS, CAS Registry-Nummer 27928-00-3);
- 4-{4-[4-(Dipentylamino)phenyl]-1,3-butadienyl}-1-(4-sulfobutyl)pyridiniumhydroxid (RH421; Aldrich, CAS Registry-Nummer 107610-19-5)

- Bis-(1,3-Dibutylbarbitursäure)trimethinoxonol ($Dibac_4$(3), Aldrich, CAS Registry-Nummer 70363-83-6)
- 2',7'-Bis-(2-carboxyethyl)-5(6)carboxyfluoreszein (BCECF, Aldrich, CAS Registry-Nummer 85138-49-4);
- N,N'-Dimethyl-9,9'-biacridiniumdinitrat (Lucigenin, Aldrich, CAS Registry-Nummer 2315-97-1);
- 6-Methoxy-N-(3-sulfopropyl)chinolinium (SPQ, CAS Registry-Nummer 83907-40-8);
- N-(Ethoxycarbonylmethyl)-6-methoxychinoliniumbromid (MQAE, Aldrich, CAS Registry-Nummer 162558-52-3);
- N,N'-[1,4,10-Trioxa-7,13-diazacyclopentadecan-7,13-diylbis(2,5-dimethoxy-4,1-phenylen)]bis[3',6'-bis(acetyloxy)-2',7'-dichlor-3-oxo-spiro[isobenzofuran-1(3H),9'-[9H]xanthen]-5-carboxamid, (Sodium Green ®, Molecular Probes, CAS Registry-Nummer, 159952-49-5);
- N-(4-[1-(7-Diethylaminocumarin-3-yl)-1H-1,2,3-triazol-4yl]phenylaza-18-Krone-6-Ether (siehe Ast, Sandra et al., Chem. Commun., 2011, 47, 4685-4687);
- N-(2-Methoxyethoxy)phenylaza-18-Krone-6)-4-(cumarinyl)-1 H-1,2,3-triazol (siehe Ast, Sandra et al., Chem. Commun., 2011, 47, 4685-4687),
- N-[2-[(Acetyloxy)methoxy]-2-oxoethyl]-N-[4-[[[3',6'-bis(acetyloxy)-2',7'-difluor-3-oxospiro[isobenzofuran-1(3H),9'-[9H]xanthen]-5-yl]carbonyl]amino]-2-[2-[2-[bis[2-[(acetyloxy)methoxy]-2- oxoethyl]amino]phenoxy]ethoxy]phenyl]-glycin-(acetyloxy)methyl ester (Oregon Green™ 488 BAPTA-1),
- N-[2-[2-[2-[Bis(carboxymethyl)amino]-5-[[(2',7'-difluor-3',6'-dihydroxy-3-oxospiro[isobenzofuran-1(3H),9'-[9H]xanthen]-5-yl)carbonyl]amino]phenoxy]ethoxy]-6-fluorphenyl]-N-(carboxymethyl)-glycinhexakaliumsalz (Oregon Green™ 488 BAPTA-6F) und
- N-[2-[2-[2-[Bis(carboxymethyl)amino]-5-[[(2',7'-difluor-3',6'-dihydroxy-3-oxospiro[isobenzofuran-1(3H),9'-[9H]xanthen]-5-yl)carbonyl]amino]phenoxy]ethoxy]-5-nitrophenyl]-N-(carboxymethyl)-glycinhexakaliumsalz (Oregon Green™ 488 BAPTA-5N).
- Siehe z.B. Yoshiki et al., Optical Review Vol. 12, No. 5 (2005) 415-419 für die Auswahl weiterer Calcium-sensitiver Farbstoffe.

## Abkürzungen und Symbole

Folgende Abkürzungen und Symbole werden nachfolgend verwendet

**FD-S:** Frequency Domain Spectroscopy (Phasenmodulationsspektroskopie)
**d-FD-S:** FD-S unter Verwendung von zwei Modulationsfrequenzen
**TD-S:** Time Domain Spectroscopy (Puls-Methode)
**LD:** Laserdiode
**[X]:** Konzentration an X
**$K_{SV}$:** Stern-Volmer-Konstante
**E:** Extinktion
**f:** Modulationsfrequenz
$\varphi$**:** Phasenverschiebung in Grad
$\lambda$**:** Wellenlänge in nm
$\lambda_{em}$**:** Emissionswellenlänge
$\lambda_{ex}$**:** Anregungswellenlänge
**Int ($\lambda$ = X nm):** Fluoreszenzintensität bei $\lambda_{em}$ = X nm
$\tau$**:** Lumineszenzabklingzeit
**($\tau$):** mittlere Abklingzeit aus TD-S-Messungen
$\tau_0$**:** Abklingzeit in Abwesenheit eines Analyten (Löschers)
$\tau_s$**:** scheinbare Abklingzeit (FD-S)
**U:** Detektorspannung ($\alpha$ Lumineszenzintensität)
**V:** Volumen

## Kurze Beschreibung der Figuren

Es zeigt

Figur 1 die Kalibrierung einer Optode zur Sauerstoffbestimmung am Beispiel des Sauerstoff-sensitiven Pd-Sensors (Palladium(II)-meso-Tetra(pentafluorphenyl)porphyrin, immobilisiert in Poly(2,2,2-trifluorethylmethacrylat) (P1)), und eines Ruthenium-basierten Sensors (Ruthenium(II)-Tris(4,7-diphenyl-1,10-phenanthrolin)-perchlorat immobilisiert in Polystyrol-Kugeln);

Figur 2A die Abklingkurven von CF, immobilisiert in SPEEK in Abhängigkeit vom pH-Wert, konstante NaCl-Konzentration: 0,3 Bestimmung der Abklingzeit von CF immobilisiert in SPEEK in Abhängigkeit vom pH-Wert 0,3 mol L-1; Figur 2B die mittlere Abklingzeit, berechnet aus Ergebnissen von biexponentiellen Anpassungen

Figur 3A Abklingkurven von Cl-CF immobilisiert in SPEEK in Abhängigkeit vom pH-Wert bei konstanter NaCl-Konzentration: 0,3 mol ·L-1 ($\lambda_{ex}$ = 460 nm; $\lambda_{em}$ = 520 nm); Figur 3B die mittlere Abklingzeit, berechnet aus Ergebnissen von biexponentiellen Anpassungen;

Figur 4 die Abklingzeiten von CF immobilisiert in SPEEK in Abhängigkeit vom pH-Wert und Hintergrundelektrolyt, gemessen mittels FD-S (f1 = 30 MHz) am Mikroskopiearbeitsplatz;

Figur 5A Fluoreszenzspektren von immobilisiertem CF ($\lambda_{ex}$ = 440 nm) in SPEEK bei verschiedenen pH-Werten; Figur 5B das Intensitätsverhältnis bei Auswertung bei verschiedenen Emissionswellenlängen;

Figur 6A Fluoreszenzspektren von immobilisiertem CF ($\lambda_{ex}$ = 405 nm; $\lambda_{em}$ = (505-580) nm) in SPEEK bei verschiedenen pH-Werten;
Figur 6B die Auswertung der Intensität bei verschiedenen Emissionswellenlängen;

Figur 7A Fluoreszenzspektren von immobilisiertem CF ($\lambda_{ex}$ = 440 nm) in SPEEK bei pH = 0,5 und pH = 4,5 mit steigender Salzkonzentration;
Figur 7B die Auswertung der Intensität bei verschiedenen Emissionswellenlängen.

Figur 8 Fluoreszenzspektren von immobilisiertem CF ($\lambda_{ex}$ = 405 nm) in SPEEK bei pH = 1,3 und 6,8 vor und nach Messungen in Salzlösungen;

Figur 9 Abklingzeiten von CF immobilisiert in SPEEK in Abhängigkeit von der NaCl-Konzentration der Lösung bei verschiedenen pH-Werten; $\lambda_{ex}$ = 440 nm;

Figur 10 Abklingzeiten von CF und Cl-CF immobilisiert in SPEEK in Abhängigkeit vom pH-Wert; konstante NaCl-Konzentration: 0,3 mol $\cdot L^{-1}$ ($\lambda_{ex}$ = 405 nm; $\lambda_{em}$ =505 nm-580 nm; f = 30 MHz);

Figur 11A Abklingzeiten von CF immobilisiert in SPEEK in Abhängigkeit vom pH-Wert, $\lambda_{ex}$ = 405 nm; $\lambda_{em}$ = 505 nm-580 nm); Figur 11B das Ansprechverhalten beim Wechsel von pH = 2 auf pH = 6;

Figur 12A die Abklingzeiten von Pt-TPFPP immobilisiert in P1 in Abhängigkeit von der Sauerstoffkonzentration;

Figur 12B Abklingzeiten von Pt-TPFPP immobilisiert in P1 in Abhängigkeit vom pH-Wert ($\lambda_{ex}$ = 405 nm; $\lambda_{em}$ > 600 nm);

Figur 13 die Emissionsspektren einer erfindungsgemäßen CF/SPEEK- und Pt-TPFPP/P1-Optode ($\lambda_{ex}$ = 440 nm); Figur 13A die Messung bei 21 vol% Sauerstoff, Figur 13B die Messung bei 0 vol% Sauerstoff;

Figur 14 die Emissionsspektren einer erfindungsgemäßen CF/SPEEK- und Pt-TPFPP/P1-Optode ($\lambda_{ex}$ = 440 nm). Figur 14A zeigt die Messung beim pH-Wert 4, Figur 14B die Messung beim pH-Wert 1,3;

Figur 15 zeigt die Auswertung der Emissionsspektren der erfindungsgemäβen Dual-Optode zur Bestimmung des pH-Werts und der Sauerstoffkonzentration; in Figur 15A ist das pH-Signal bei verschiedenen Wellenlängen und $O_2$-Konzentrationen gezeigt; Figur 15B zeigt die Stern-Volmer-Auftragung der Intensitäten bei 650 nm bei unterschiedlichen pH-Werten.

Figur 16 Kalibrierungen der erfindungsgemäßen Dual-Optode zur Bestimmung des pH-Werts und der Sauerstoffkonzentration;
Figur 16A zeigt Abklingzeiten und Intensitäten von CF in SPEEK bei sauerstofffreier und luftgesättigten Pufferlösungen ($\lambda_{ex}$ = 405 nm; $\lambda_{em}$ = 505 nm - 580 nm); Figur 16B zeigt Abklingzeiten von Pt-TPFPP immobilisiert in P1 in Abhängigkeit vom pH-Wert und der Sauerstoffkonzentration ($\lambda_{ex}$ = 405 nm; $\lambda_{em}$> 600 nm). Beide Optodenmaterialien befinden sich auf einer Faser.

Figur 17A zeigt die Abklingzeit des $O_2$-Signals der erfindungsgemäßen Dual-Optode zur Bestimmung des pH-Werts und der Sauerstoffkonzentration bei verschiedenen $O_2$-Konzentrationen in Abhängigkeit vom pH-Wert.

Figur 17B zeigt die Stern-Volmer-Auftragung des $O_2$-Signals.

Figur 18 den schematischen Aufbau bei der ortsaufgelösten Bestimmung von pH-Werten (rechter Bereich) und Sauerstoffkonzentrationen (linker Bereich); weiterhin wird ein Mikroskopiebild der erfindungsgemäßen Dual-Optode unter Anregung mit UV-Licht, Aufnahme durch einen 500 nm Longpassfilter, gezeigt.

Figur 19 die Bestimmung der Chloridionenkonzentration unter Verwendung der Lucigenin/PHPMA-Optode mittels TD-S.
Figur 19A zeigt das Ergebnis mittels triexponentieller Anpassung der Abklingkurven; Figur 19B die Stern-Volmer-Auftragung unter Verwendung der mittleren Abklingzeit ($\tau$).

## Herstellung der erfindungsgemäßen Optode und der Optoden zur Kalibrierung

### Herstellung der erfindungsgemäßen Optoden

Zur Herstellung der erfindungsgemäßen Optoden wird mindestens ein pH-sensitiver Farbstoff im Polymer SPEEK immobilisiert. Zur Bestimmung weiterer Parameter mittels der Optode werden weitere Sensorfarbstoffe in die SPEEK-Membran eingebracht.
Weiterhin ist es bevorzugt, dass die erfindungsgemäße Optode weitere Polymermatrizen umfasst, in welchen Sensorfarbstoffe immobilisiert sind.
Bei der Auswahl geeigneter weiterer Sensorfarbstoffe, wie beispielsweise von Sauerstoff-sensitiven Farbstoffen, empfiehlt es sich, dass sich die Emissonswellenlängen der ausgewählten Sensorfarbstoffe unterscheiden. Die Sensorfarbstoffe werden so gewählt, dass sie spektral trennbar sind. In bevorzugten Ausführungsbeispielen war die Emissionswellenlänge des weiteren Sensorfarbstoffs größer als 600 nm.

### Immobilisierung der Sensorfarbstoffe in SPEEK

Zur Immobilisierung der Sensorfarbstoffe in den Polymermatrizen wird SPEEK in wässriger Lösung mit einer Lösung des entsprechenden Sensorfarbstoffs gequollen.

### Immobilisierung der Sensorfarbstoffe in weiteren Polymermatrizes

In einem Ausführungsbeispiel der vorliegenden Erfindung werden die Polymere mit einer wässrigen Lösung des jeweiligen Sensorfarbstoffs (pH $\approx$ 6,5 - 7, Konzentration: $10^{-4}$ mol-$L^{-1}$) gequollen.
Je nach Polarität des Polymers kann die Immobilisierung des Sensorfarbstoffs beispielsweise auch durch Aufquellen des Polymers in Ethanol und Hinzufügen einer alkoholischen Lösung des entsprechenden Farbstoffs erfolgen. Nach Zusammengeben der Komponenten wird die Mischung beispielsweise durch Schütteln homogenisiert.

### Herstellung der erfindungsgemäßen SPEEK/CF- und SPEEK-CI-CF-Optoden

0,3 g trockenes SPEEK (DS = 60 %) wird in einem Gemisch aus 4 mL destilliertem Wasser und 100 $\mu$l Farbstofflösung (CF oder CI-CF, c = 0,002 mol/L) gequollen. Während des Quellvorgangs wird das Gemisch mit einem Schüttelapparat geschüttelt (800 rpm). Die Lösung entfärbt sich innerhalb von 3 Stunden, während das Polymer den Farbstoff aufnimmt. Dann wird das SPEEK/Farbstoff- Gemisch entnommen und in Wasser (destilliert, mit verdünnter NaOH auf pH = 7 eingestellt) überführt und bei 60-65 °C mindestens 8 Stunden lang belassen. Das abgekühlte SPEEK/Farbstoff-Gemisch wird nun zwischen zwei Objekträgern gepresst, welche mit ca. 2 Kilogramm schweren Metallblöcken belastet werden, wodurch nach einem Zeitraum von mindestens 10 Stunden dünne Schichten entstehen. Das Material wird nun zur Trocknung bei 80°C im Trockenschrank belassen (mindestens 6 Stunden lang). Mit einem Skalpell werden kleine (1x1x1) mm Stücke zugeschnitten (für die Dual-Optode nochmals halbiert). Ein Stück wird mit UV-Kleber (Norland NOA 63) auf einer polierten Faseroberfläche befestigt.

### Herstellung der Lucigenin/PHPMA-Optode

In eine 0,005 Molare wässrige Lucigeninlösung (pH zwischen 5-6) wurden 0,3 g trockenes PHPMA gegeben. Das Polymer beginnt zu quellen und nimmt den Farbstoff auf. Das Gemisch wird bei 800 rpm über 3 Stunden lang geschüttelt. Mit einem Skalpell werden (1x1x1) mm Stücke zurechtgeschnitten, die Dicke der Stücke sollte kleiner als 0,5 mm betragen, da sonst die Ansprechzeit des Optodenmaterials zu lang ist. Nach Trocknung bei 65°C wird wie oben im Zusmmanhang der SPEEK/CF- und SPEEK/CI-CF-Optoden beschrieben, das Polymer auf eine polierte Faserspitze

geklebt.

**Herstellung der Pt-TPFPP/P1 und Pd-TPFPP/P1 Optodenmaterialien**

Es wurden 2,8 mg Pt-TPFPP bzw. 2,6 mg Pd-TPFPP in 2 ml Butanon gelöst. In diese Lösungen wurden 154 mg Poly(2,2,2-trifluorethylmethacrylat) (P1), 3,71 mg DABCO, 1 mg $SiO_2$ (Aerosil ® R972) und 39 mg Ormosil gegeben. In die entstandene, leicht viskose Lösung wurde eine zu beschichtende Faser eingetaucht. Mittels Mikroskop (Zeiss Axiostar) wurde geprüft, ob die Spitze vollständig und gleichmäßig beschichtet ist. Zum Trocknen wurde die optische Faser zehn Stunden lang bei 65 °C im Trockenschrank belassen. Es wurde eine 1 mm dicke Faser verwendet.

**Herstellung der erfindungsgemäßen Optode CF/SPEEK-(Pt-TPFPP)/P1-Optode**

Zuerst wurde der Farbstoff Pt-TPFPP wie oben beschrieben, im Polymer P1 immobilisiert eine 1 mm dicke Faser in das Polymer/Sensorfarbstoff-Gemisch getaucht und wie oben beschrieben, getrocknet.
Mit einem in iso-Propanol getränktem Papiertuch wird die Beschichtung in einem Teilbereich der Faseroberfläche, vorliegend die Hälte des beschichteten Bereichs, vollständig entfernt, so dass in diesem Bereich keine Reste des Sensorfarbstoffs auf der Faser verbleiben. Auf der nun sauberen Hälfte der Faseroberfläche wird eine dünne Schicht UV-Kleber aufgebracht und ein Stück SPEEK mittels Pinzette platziert. Durch Fluoreszenzmikroskopie wird dahingehend überprüft, dass sich die Schichten nicht überlagern.

**Aufbringen auf einen Träger / Trägermaterialien**

Das Aufbringen des Optodenmaterials auf einen Träger kann nach jedem beliebigen Verfahren erfolgen, das dafür im Stand der Technik bekannt ist. Für faserbasierte Untersuchungen, bei welchen der Träger ein Lichtwellenleiter ist, kann das Optodenmaterial durch Eintauchen eines Faserendes in das Polymer erfolgen, in dem der Sensorfarbstoff immobilisiert ist. Zur Fixierung kann die Trocknung in einer Heizvorrichtung erforderlich sein. Zur Fixierung können auch geeignete Kleber verwendet werden.

Auch kann es für bestimmte Untersuchungen ausreichend sein, das Optodenmaterial auf einem Glas-Objektträger bereitzustellen. Das Optodenmaterial, das SPEEK und einen darin immobilisierten Farbstoff umfasst, ist nur in schwer flüchtigen Lösungsmitteln löslich. Für die Herstellung dünner Schichten kann das gequollene Optodenmaterial zwischen zwei Objektträgern gepresst werden. Hierdurch können Schichten mit unterschiedlichster Schichtdicke erzeugt werden. Für optische Untersuchungen wurden auf diesem Wege Schichten mit einer Dicke zwischen 300 μm bis 500 μm erzeugt.

Im Rahmen der vorliegenden Erfindung wurden unter anderem Lichtwellenleiter als Trägermaterial verwendet. Die Auswahl des geeigneten Materials ist einem Fachmann bekannt.
Alle im Rahmen der Erfindung verwendeten optischen MM-Glasfasern (MultiMode-Glasfasern) waren mit einem speziellen nicht-fluoreszierendes Silikon-Coating beschichtet und wurden von der Firma FiberTech hergestellt.

Für die Sauerstoffanalytik wurden Fasern mit einem Kerndurchmesser von 100 μm verwendet. Für die intensitätsbasierten pH-Messungen wurden vier 100 μm Faser zu einem Bündel vereint, eine Faser wurde als Detektionsfaser verwendet, mit den anderen drei Fasern wurde das Anregungslicht zur Optode geführt. Für die Abklingzeitmessungen zur pH-Bestimmung wurden Fasern mit einem Kerndurchmesser von 1 mm verwendet. Die Anregung erfolgte über eine 430 μm Faser, welche gleichzeitig mit der Detektionsfaser (auch mit einem Kerndurchmesser von 430 μm) in einem SMA-Stecker verklebt und mit der 1 mm Faser, auf der die Optode befestigt war, verbunden.

Bei den Optoden zur Bestimmung zweier Parameter (Dual-Optoden) wurden drei Fasern mit einem Durchmesser von 430 μm in einen SMA-Stecker mit einem Lochdurchmesser von 1000 μm geklebt (Schwanheimer Industrie-Sekundenkleber). Anschließend wurde der Stecker mit Diamantschleifpapier geglättet und poliert. Die beiden Optodenmaterialien wurden auf eine 1 mm Faser gebracht und mittels SMA-Steckverbindung mit dem Stecker der drei Fasern gekoppelt. Eine der drei Fasern dient der Anregung und die anderen beiden zur Detektion der pH- bzw. $O_2$-abhängigen Emission.

**Herstellung der erfindungsgemäßen Optode CF/SPEEK-(Pt-TPFPP)/P1-Lucigenin/PHPMA-Optode**

Auf einer Faserspitze wurden nacheinander die folgenden Optodenmaterialien aufgebracht: Pt-TPFPP, immobilisiert Poly(2,2,2-trifluorethylmethacrylat) (P1), Lucigen, immobilisiert in Poly(2-hydroxypropylmethacrylat) (PHPMA) und 6-Carboxyfluorescein, immobilisiert in SPEEK.

## Vorversuche und Kalibrierungen

Kalibrierung der Optoden

Bevor die Optoden für die Analytik unbekannter Proben verwendet werden können, müssen sie in definierten Lösungen kalibriert werden. Dies muss insbesondere deshalb für jeden Sensor geschehen, da die Optodenspitzen unterschiedlich beschichtet sein können.

### Kalibrierung der pH-Optoden

Für die Kalibrierung der Optoden wurden Pufferlösungen verwendet, da bei diesen die pH-Wert-Stabilität trotzt Änderungen der Zusammensetzung höher ist. Sie bestehen aus schwachen Säuren und deren Salzen, sowie einer starken Base. Pufferlösungen im Bereich zwischen 7,2 und 9 wurden aus Gemischen von Tris(hydroxymethyl)-aminomethanlösung und Salzsäure hergestellt. Im Bereich zwischen pH 1 bis 6,5 wurden Gemische aus Zitronensäuremonohydrat, Natriumhydroxid und Salzsäure hergestellt. Die Zusammensetzung wurde wie von Rauscher et al. (Rauscher, Voigt, Wilke, Wilke, Chemische Tabellen und Rechentafeln für die analytische Praxis, volume 6, VEB Deutscher Verlag für Grundstoffindustrie, 1977, 140-145) beschrieben, verwendet und der pH-Wert mit einer Standard-Glas-Elektrode (WTW SenTix21) überprüft. Das pH-Meter wurde dafür mit Standardpufferlösungen (Carl Roth GmbH + Co. KG) kalibriert. Für die Überprüfung von Lösungen mit pH-Werten zwischen 0 bis 8 wurden Standardpuffer mit pH= 4,00 ± 0,02 (Zit-ronensäure/NaOH/NaCl) und pH= 7,00 ± 0,02 (Phosphatgemisch) verwendet, für die Überprüfung von Lösungen mit pH > 8 mit Standardpuffer von pH= 7,00 ± 0,02 und pH= 9,00 ± 0,02 (Borsäure/NaOH/KCl).

Mit folgender sigmoidalen Funktion wurden die Daten der Kalibrierungen angepasst:

(Gleichung 1)

$$\tau = \frac{\tau_{A^-} - \tau_{AH}}{1 + e^{\frac{\mathrm{pH\ -\ p}K_S}{\Delta \mathrm{pH}}}} + \tau_{AH}$$

Die Differenz $\tau_{A^-}$-$\tau_{AH}$ beschreibt die Dynamik der Signal-Änderung einer Optode, $\tau_{A^-}$ repräsentiert die Abklingzeit der deprotonierten Farbstoff-Spezies, wohingegen $\tau_{AH}$ der Abklingzeit der protonierten Spezies entspricht. Der Umschlagpunkt der Kalibrierkurve entspricht dem $pK_s$-Wert der Optodenkombination. An Stelle der Abklingzeiten wurden auch Fluoreszenzintensitäten verwendet.

### Kalibrierung der Sauerstoff-Optode

Aufgrund der Immobilisierung des Farbstoffes in eine Polymermatrix sind je nach Optodenbeschaffenheit unterschiedlich viele Moleküle nicht für den Sauerstoff zugänglich und diese phosphoreszieren demzufolge immer mit der gleichen Abklingzeit. Die Stern-Volmer-Auftragung zeigt keinen linearen Zusammenhang, weil nicht alle Farbstoffmoleküle für den Sauerstoff (Quencher) gleichermaßen erreichbar sind. Diese Beobachtung wurde oft im Zusammenhang mit Sauerstoffsensorik gemacht (siehe beispielsweise Y.-L. Loet al., "Temperature compensation of fluorescence intensity-based fiber-optic oxygen sensors using modified Stern-Volmer model", Sensors and Actuators B 2008, 131, 479-488.74, 106-109). Für die Datenanalyse muss die Stern-Volmer-Gleichung erweitert werden:

(Gleichung 2)

$$\frac{\tau_Q}{\tau_0} = \frac{p}{1 + K_{SV} \cdot [Q]} + \frac{p_2}{1 + K_{SV,2} \cdot [Q]} \quad \text{dabei gilt: } p + p_2 = 1$$

Im Festkörper ist die Abklingzeit und somit auch die Stern-Volmer-Konstante jedes immobilisierten Sensorfarbstoffmoleküls von dessen individueller Umgebung abhängig. Prinzipiell muss die Stern-Volmer-Gleichung um beliebig viele Terme erweitert werden. Die experimentellen Daten zeigen jedoch, dass es ausreicht, nur zwei Terme mit $\mathbf{K_{SV,2}}$ = 0 zu verwenden, weshalb Gleichung 2 vereinfacht werden kann zur modifizierte Stern-Volmer-Gleichung (siehe E. Schmälzlin et al., "An optical multifrequency phase modulation method using microbeads for measuring intracellular oxygen concentrations in plants", Biophysical Journal 2005, 89, 1339-1345):

(Gleichung 3)

$$\frac{\tau_Q}{\tau_0} = \frac{p}{1 + K_{SV} \cdot [Q]} + (1 - p)$$

Formal werden die Farbstoffmoleküle in zwei Gruppen eingeteilt: Die für den Löscher erreichbaren Farbstoffmoleküle entsprechen dem Anteil p, die restlichen Farbstoffmoleküle sind für den Sauerstoff unerreichbar. Es handelt sich um einen von der Schichtdicke und den Inhomogenitäten des Optodenmaterials abhängigen Parameter. Mit Gleichung 3 kann der beobachtete Zusammenhang zwischen $\tau_0$ und der Löscherkonzentration gut beschrieben werden. Die mittels dieser Gleichung berechnete Stern-Volmer-Konstante kann nicht mit den Konstanten von freien Farbstoffen verglichen werden, da die Gleichung empirisch gefunden wurde.

Aufgrund der nicht-linearen modifizierten Stern-Volmer-Gleichung muss jeder Sensor in der Praxis bei mindestens drei $O_2$-Konzentrationen kalibriert werden. Für jeden Sensorfarbstoff müssen drei geeignete $O_2$-Konzentrationen ermittelt werden, welche von der jeweiligen Dynamik des Farbstoffes abhängt. Dazu wurden die Sensoren bei mehr als zehn verschiedenen $O_2$-Konzentrationen kalibriert.

In Figur 1 sind exemplarisch die Kalibrierdaten einer Pd-Sensors (Palladium(II)-meso-Tetra(pentafluorphenyl)porphyrin, immobilisiert in Poly(2,2,2-trifluorethylmethacrylat) (P1) und eines Ruthenium-basierten Sensors (Ruthenium(II)-Tris(4,7-diphenyl-1,10-phenanthrolin)perchlorat immobilisiert in Polystyrol-Kugeln) gezeigt. Die beiden Sensorfarbstoffe zeigen einen deutlich unterschiedlichen dynamischen Bereich.

Die Abklingzeit verändert sich beim Pd-Sensor bei Konzentrationen zwischen 0 bis 10 vol% $O_2$. Der Ruthenium-basierte Sensor zeigt auch bei sehr hohen $O_2$-Konzentrationen eine signifikante Änderung in der Abklingzeit. Für beide Sensoren kann Gleichung 3 als Kalibrierfunktion angewandt werden. Die für die Dreipunktkalibrierung zu verwendenden $O_2$-Konzentrationen müssen jedoch an den jeweiligen dynamischen Bereich des Sensors angepasst werden. Bei beiden Sensoren wird der $\tau_0$-Wert durch Bestimmung der Abklingzeit bei Abwesenheit von Sauerstoff bestimmt. Eine weitere Konzentration ist durch die maximale $O_2$-Konzentration an der oberen Grenze des dynamischen Bereiches gegeben. Die mittlere Konzentration an Sauerstoff sollte dem Wert entsprechen, welcher sich aus dem Schnittpunkt der beiden Geraden ergibt, welche aus den ersten und letzten Werten der Kalibrierung mit möglichst vielen Konzentrationen ermittelt werden (Figur 1). Bei Verwendung dieser drei $O_2$-Konzentrationen kann mit Hilfe der modifizierten Stern-Volmer-Gleichung eine über den gesamten dynamischen Bereich gültige Kalibrierung des jeweiligen Sensors erreicht werden. Bei Verwendung einer anderen mittleren Konzentration weicht der berechnete Wert für den Parameter p und die Stern-Volmer-Konstante stark von den Werten ab, welche bei Verwendung von allen zehn gemessenen Konzentrationen resultieren. Die Berechnung der Konzentration an $O_2$ würde somit durch eine ungenaue Kalibrierfunktion zu falschen Ergebnissen führen.

In Tabelle 1 sind die erhaltenen Stern-Volmer-Konstanten mit verschiedenen verwendeten Datenpunkten gezeigt.

**Tabelle 1**

| [O2] / vol % | $K_{SV}$ / (vol %)$^{-1}$ | *p* | $\tau_0$ / $\mu$s |
|---|---|---|---|
| **0-10 (16 Werte)** | 4,52 ± 0,08 | 0,8914 | 815,8 |
| 0; 10; 0,1 | 4,91 ± 0,31 | 0,8914 | 815,8 |
| **0; 10; 0,3** | 4,50 ± 0,27 | 0,8914 | 815,8 |
| 0; 10; 0,4 | 4,39 ± 0,28 | 0,8914 | 815,8 |

***p*** und $\tau_0$ wurden mittels der 16-Punkt-Kalibrierung ermittelt und bei den folgenden 3-Punkt-Kalibrierungen als Fixwerte betrachtet.

Beim Verwenden der über den Schnittpunkt ermittelten Sauerstoffkonzentration passt die $K_{sv}$-Konstante und somit die Kalibrierfunktion am Besten mit dem Wert überein, welcher bei allen gemessenen Konzentrationen berechnet

wurde. Diese Sauerstoffkonzentration von 0,3 vol% sollte also für die Ermittlung der Kalibrierfunktion verwendet werden.

Des Weiteren wird für jeden Sensor der Wert bei Abwesenheit von Sauerstoff ($\tau_0$) ermittelt und ein Wert am oberen Ende des dynamischen Bereichs des jeweiligen Farbstoffes.

Bei der Dreipunktkalibrierung für Anwendungen des gezeigten Pd-Sensors sollte bei 0 vol%, 10 vol% und bei 0,3 vol% Sauerstoff gemessen werden. Die Abklingzeiten der ersten beiden Konzentrationen werden im Messprogramm notiert. Beim Messen in 0,3 vol% wird dann der p-Wert variiert, so dass die richtige Konzentration angezeigt wird. Dabei ist darauf zu achten, den Wert von *p* möglichst genau zu ermitteln. Eine geringe Änderungen von *p* (4%) führt zu einer signifikanten Änderung der Stern-Volmer-Konstante (40%) und somit zu einer großen Abweichung der Kalibrierfunktion von den experimentellen Daten.

Bei der Bestimmung von Sauerstoffkonzentrationen mittels TD-S werden keine monoexponentiellen Abklingkurven erhalten. Aufgrund der unterschiedlichen Umgebungen eines jeden Farbstoffmoleküls und der daraus resultierenden unterschiedlichen Erreichbarkeiten für den Löscher zeigen die Sensoren eine Abklingzeitverteilung. Die Berechnung der Lebenszeit erfolgt mittels der gestreckten Exponential-Funktion (siehe Y. Cai et al., "Data analysis and aging in phosphorescent oxygenbased sensors", Sensors and Actuators B 2010, 146, 14-22.):

(Gleichung 4)

$$I(t) = I_0 \cdot e^{(-\frac{t}{\tau})^\beta}$$

Der Parameter β (1 ≥ β > 0) gibt die Breite der Verteilung an. Je schmaler die Verteilung, umso näher liegt β am maximalen Wert von 1. Je kleiner β wird, desto breiter ist die Abklingzeitverteilung.

Kleine Werte zeigen somit eine Inhomogenität der Sensormatrix an. Die Homogenität des Optodenmaterials ist abhängig von der Löslichkeit des Farbstoffes und des Analyten in dem Polymer.

**pH-Wert-Messungen**

Mit zwei Ausführungsformen der erfindungsgemäßen Optoden wurden pH-Wert-Bestimmungen vorgenommen. Bei den Ausführungsbeispielen waren als pH-Sensorfarbstoffe 6-Carboxyfluorescein und 5(6)-Carboxy-2',7'-dichlorfluorescein (Cl-CF) in SPEEK immobilisiert.

Es wurde mit der Optode SPEEK/6-Carboxyfluorescein zunächst ein sehr langsames (> 30 min) Ansprechen auf pH-Änderungen beobachtet. Um die Reaktion auf andere Ionen zu untersuchen, wurde eine Messreihe mit steigender NaCl-Konzentration durchgeführt. An die Abklingkurven wurde eine bi-exponentielle Funktion angepasst. Besonders bei geringen Konzentrationen an NaCl fluoresziert eine Komponente mit einer kurzen Abklingzeit von 1 ns, nach der Zugabe von NaCl wird diese Komponente nicht mehr beobachtet. Bis zu einer Konzentration von 0,6 $mol \cdot L^{-1}$ NaCl steigt die mittlere Abklingzeit (τ) und bleibt dann konstant. Auch nach mehrfachem Waschen und Lagerung in entionisiertem Wasser bleibt die Abklingzeit konstant bei über 2,5 ns. Der Prozess ist somit nicht reversibel. Wurde das Optodenmaterial mit NaCl-Lösung behandelt, wird die Ansprechzeit deutlich verkürzt auf unter 5 Minuten. Beim SPEEK führt die Zugabe von Salz zu einer Erhöhung der Wasseraufnahmefähigkeit, weshalb das Volumen größer wird und die Protonen beweglicher.

Die Bestimmung der Abklingzeit in Abhängigkeit vom pH-Wert ist in Figur 2 gezeigt. Die Abklingkurven wurden mit einer bi-exponentiellen Funktion ausgewertet, wobei die Abklingzeiten der zwei Komponenten unterschiedliche Umschlagpunkte aufweisen, τ1 bei pH = 4,1 und τ2 bei pH = 2,9. Der Um-schlagpunkt der berechneten mittleren Abklingzeit (τ) liegt bei pH = 3,2.

Entsprechende Messungen wurden mit 5(6)-Carboxy-2',7'-dichlorfluorescein (Cl-CF) durchgeführt (Figur 3). Hier schwankt eine Abklingzeit zwischen 3,5 ns und 5 ns während die andere mit dem pH-Wert zunimmt. Der Umschlagpunkt liegt bei pH = 1,4.

Es wurde festgestellt, dass bei den in SPEEK immobilisierten pH-sensitiven Farbstoffe CF und Cl-CF die Abklingzeit abhängig vom pH-Wert bleibt. Die Umschlagspunkte stimmen jedoch nicht mit denen überein, die für die Sensorfarbstoffe in Lösung ermittelt wurden.

Vor der Charakterisierung des Optoden-Materials mittels Fasersensorik wurden Phasenmodulationsspektroskopie-Messungen (FD-S Messungen) an einem Mikroskopiearbeitsplatz durchgeführt (Figur 4). Zum Vergleich wurden auch die Kalibrierungen der Time-Domain-Spektroskopie-Messungen (TD-S Messungen) in der Abbildung hinzugefügt.

Wie auch schon bei den von den Erfindern durchgeführten Bestimmungen in Lösung, sind die mittels TD-S ermittelten Abklingzeiten bei höheren pH-Werten um eine Nanosekunde länger als bei den FD-S-Bestimmungen. Die Umschlagspunkte liegen jedoch im gleichen Bereich und werden durch einen höheren Salzgehalt in Richtung kleiner pH-Werte verschoben.

**Intensitätsbasierte Fluoreszenz der erfindungsgemäßen SPEEK/CF-Optode**

In Figur 5 sind die Spektren der erfindungsgemäßen Optode SPEEK/ CF (in SPEEK immobilisiertes CF) gezeigt. Die spektrale Lage der Emission ist, verglichen mit den Ergebnissen in Lösung, zu kürzeren Wellenlängen verschoben. Besonders im stark sauren pH-Bereich zeigt sich eine Bande bei 490 nm. Ab pH = 4 erscheint deutlich die Emissionsbande bei 520 nm, wobei sich auch eine Schulter bei 550 nm ausbildet. Bei Auswertung des Quotienten der Intensitäten bei 490 nm und 520 nm wird ein Umschlagpunkt von 4,2 ermittelt. Bei Auswertung bei 490 nm und 550 nm wird ein Umschlagpunkt von 3,4 ermittelt. Der Anteil der protonierten Spezies der Emission bei 550 nm ist größer als bei 520 nm, weshalb der Umschlagpunkt bei kleineren pH-Werten liegt.

In Figur 6 werden die Ergebnisse der Messungen bei Anregung mit 405 nm gezeigt. Dabei ist eine Auswertung bei den Wellenlängen 490 nm oder 550 nm ohne Referenzierung möglich, da sie gut separiert vorliegen. Die Bandenform bei den jeweiligen pH-Werten entspricht denen bei Anregung mit 440 nm. Bei 490 nm resultiert ein Umschlagpunkt von 2 und bei 550 nm ein Umschlagpunkt von 5,4.

Bei den in Figur 7 gezeigten Messungen ist die Salzkonzentration der Kalibrierlösung erhöht worden. Mit steigender Salzkonzentration sinkt die Intensität der Fluoreszenz, wie in Teil A der Figur 7 zu sehen, bleibt die Intensität ab 2,5 $mol{\cdot}L^{-1}$ NaCl konstant. Durch die interne Referenzierung sollte eine pH-Bestimmung trotz der Querempfindlichkeit möglich sein, da sich die Bandenform bei der Zugabe von NaCl nicht ändert. Bei pH = 1 erscheint nur die Bande bei 490 nm, die Ausbildung der Schulter bei 520 nm und 550 nm bleibt pH-abhängig. Die Abnahme der Intensität durch den Salzgehalt erfolgt über den gesamten Wellenlängenbereich, weshalb durch die Quotientenbildung nur die pH-Abhängigkeit ausgewertet wird. In Figur 8 ist gezeigt, dass die Intensitätsabnahme nach Spülen und Lagerung in Wasser wieder rückgängig gemacht wird.

**Fluoreszenzabklingzeit-basierte Messungen**

Es wurde zunächst der Einfluss von NaCl auf das SPEEK/CF-Optoden-material untersucht. Dabei wurden unterschiedliche pH-Werte vorgelegt. Für jeden pH-Wert wurde eine neue faseroptischer Optode hergestellt.

Um den Einfluss der NaCl-Konzentration zu zeigen, ist in Figur 9 die Änderung der Abklingzeit dargestellt. Es ist zu erkennen, dass der Einfluss von NaCl bei pH-Werten kleiner drei geringer ist als bei den höheren pH-Werten. Die Abklingzeit steigt um maximal 1,2 ns. Ab einer Konzentration von 0,6 $mol{\cdot}L^{-1}$ NaCl bleibt die Abklingzeit bei allen pH-Werten konstant. Das Verhalten ist, wie schon bei den TD-Messungen beobachtet, nicht reversibel. Die Abklingzeit der Optoden bleibt auch nach Lagerung in entionisiertem Wasser bei den längeren Zeiten.

Figur 10 zeigt die Ergebnisse von faseroptischen Messungen mittels FD-S bei 30 MHz und einer Anregungswellenlänge von 405 nm. Als Optodenmaterial diente das SPEEK in welchem CF bzw. Cl-CF immobilisiert wurde. Das Optodenmaterial wurde zunächst in 1 $mol{\cdot}L^{-1}$ NaCl-Lösung gelagert. Zu den Pufferlösungen wurde dann NaCl hinzugefügt, um eine konstante NaCl-Konzentration von 0,3 $mol{\cdot}L^{-1}$ in den Kalibrierlösungen zu erhalten, erst nach der Salzzugabe wurde der pH-Wert mittels Glaselektrode überprüft.

Figur 11 zeigt eine Kalibrierung einer CF/SPEEK-Optode in Pufferlösung ohne erhöhte Salzkonzentration. Bei jedem pH-Wert wurde die Abklingzeit dreimal bestimmt. Der Umschlagpunkt liegt bei 3,7 $\pm$ 0,2. Bei der Messung mit erhöhte Salzkonzentration liegt der Umschlagpunkt bei pH = 2,6 $\pm$ 0,2.

**Bestimmung von pH-Wert und Sauerstoffkonzentration mit einer erfindungsgemäßen Optode**

Das verwendete Ausführungsbeispiel der erfindungsgemäßen Optode umfasst den pH-sensitiven Farbstoff 6-Carboxyfluorescein (CF), der in SPEEK immobilisiert wurde. Als Polymermatrix, die zur Sauerstoffkonzentrationsbestimmung dient, umfasst die erfindungsgemäße Optode Poly(2,2,2-trifluorethylmethacrylat (P1), in welchem Platin(II)meso-Tetra(pentafluorphenylporphyrin (Pt-TPFPP) immobilisiert wurde.

Um Querempfindlichkeiten zum pH-Wert auszuschließen, wurde überprüft, ob die Abklingzeit des Optodenmaterials zur Sauerstoffbestimmung vom pH-Wert der Lösung abhängig ist. Eine derartige Abhängigkeit würde die Messwerte verfälschen. Es wurde dazu eine Kalibrierung der Optode zur Sauerstoffbestimmung ohne den pH-sensitiven Farbstoff in SPEEK bei verschiedenen pH-Werten vorgenommen. Es sollte gezeigt werden, dass die Abklingzeit des Sensors unabhängig vom pH-Wert der Lösung ist (Figur 12).

Die Stern-Volmer-Konstante der Kalibrierung bei verschiedenen pH-Werten schwankt zwischen 13 $mmol\text{-}L^{-1}$ und 16 $mmol\text{-}L^{-1}$, der Mittelwert bei allen pH-Werten ergibt eine Stern-Volmer-Konstante von (15 $\pm$ 2) $mmol\text{-}L^{-1}$.

Für die hier verwendete dicke optische Faser ist die Stern-Volmer-Konstante etwas kleiner als bei der Verwendung von dünnen Faserspitzen, da auch die Schichtdicke der Optode größer ist. Der $\tau_0$-Wert liegt zwischen 72,4 $\mu$s und 73,4 $\mu$s (gemittelt: (72,8 $\pm$ 0,4) $\mu$s). Die Schwankungen der Ergebnisse bei der Bestimmung der Kalibrierfunktion bei Verwendung von verschiedenen pH-Werten entsprechen den bei den Bestimmungen bei gleich bleibenden pH-Werten. Es kann somit von einer Unabhängigkeit des $O_2$-Signals vom pH-Wert ausgegangen werden, wenn der $O_2$-sensitive Farbstoff Pt-

TPFPP im Polymer P1 immobilisiert ist. Es besteht keine Querempfindlichkeit zum pH-Wert.

Auf der mit dem Sauerstoff-Sensor beschichteten Faser wurde nun zusätzlich das pH-sensitive Optodenmaterial SPEEK mit darin immobilisiertem 6-Carboxyfluorescein (CF) befestigt.

Es wurden Emissionsspektren bei verschiedenen pH-Werten und Sauerstoffkonzentrationen aufgenommen (Figuren 13 und 14). Die spektrale Lage der beiden Emissionen ist bei der verwendeten 440 nm Laserdiode für die Anregung gut voneinander getrennt. Diese Anregungswellenlänge ist für das CF geeigneter, weshalb die Intensitäten von beiden Farbstoffen in der gleichen Größenordnung liegen.

In Figur 15A wurde der Quotient der Signalintensität des CF bei verschiedenen Wellenlängen gebildet und gegen den pH-Wert aufgetragen. Die Auswertung der Intensität bei $\lambda$ = 490 nm / $\lambda$ = 555 nm ergibt einen linearen Verlauf zwischen pH = 1 bis pH = 6. Die Auswertungen bei $\lambda$ = 490 nm / $\lambda$ = 525 nm und $\lambda$ = 525 nm / $\lambda$ = 555 nm zeigen einen sigmoidalen Verlauf mit einem Umschlagpunkt bei 3,7 $\pm$ 0,4 für alle Sauerstoffkonzentrationen. Die Bestimmung des pH-Wertes ist unabhängig von der Sauerstoffkonzentration der Lösung.

In Figur 15B ist die Emission des Pt-TPFFP bei 650 nm mit der Stern-Volmer-Auftragung gezeigt, welche einen linearen Verlauf aufweist. Die Steigung der Geraden hat bei pH Werten zwischen 3 und 7 einen Wert von (5,8$\pm$0,2) L·mmol$^{-1}$, bei pH = 1 beträgt der Anstieg nur (5,0$\pm$0,2) L-mmol$^{-1}$. Die Immobilisierung des $O_2$-sensitiven Farbstoffes in das Wasserundurchlässige Polymer führt zu einer vernachlässigbaren Abhängigkeit des $O_2$-sensitiven Farbstoffes vom pH-Wert.

## Bestimmung der Abklingzeiten

Es wurden die Abklingzeiten der CF- und der Pt-TPFPP-Emission gemessen. Die verwendete 405 nm Laserdiode wurde abwechselnd mit 30 MHz (pH-Sensorik) und mit den üblichen Frequenzen f1 = 4,5 kHz und f2 = 9,21 kHz ($O_2$-Sensorik) moduliert. Figur 16 zeigt die Unabhängigkeit des Signals der pH-Sensorik von der Sauerstoffkonzentration. Jedoch zeigt die Abklingzeit des $O_2$-sensitiven Farbstoffes eine pH-Abhängigkeit.

Figur 17 zeigt, dass sich bei konstanter Sauerstoffkonzentration ab pH = 4 die Abklingzeit des Sauerstoff-Signals nicht mehr signifikant mit pH-Erhöhung ändert. Ab diesem pH-Wert ändert sich auch die Intensität der CF-Fluoreszenz nur noch geringfügig. Die Abklingzeiten der erfindungsgemäßen Dual-Optode sind im Vergleich zu den in Figur 12 gezeigten Abklingzeiten kürzer. Die Amplitude (Intensität) der Hintergrundfluoreszenz, in diesem Fall das Signal der pH-Messung, ist vermutlich nicht kleiner als das eigentliche Mess-Signal im roten Spektralbereich $\lambda_{em}$ > 600 nm. Die berechnete korrigierte Abklingzeit $\tau\varphi$ hätte somit erhebliche Anteile von der kurzen Abklingzeit der CF-Fluoreszenz. Es ist somit zu vermuten, dass die Annahme bei der Berechnung der korrigierten Abklingzeit aus Dual-Frequenz-Phasenmodulationsspektroskopie-Messungen (d-FD-S) nicht erfüllt sind, d.h. die Amplitude der Hintergrundfluoreszenz ist nicht zu vernachlässigen und somit auch nicht $\tau_2$, wodurch die berechnete korrigierte Abklingzeit des $O_2$-Signals kürzer erscheint. Eine Verbesserung kann durch die Verwendung von noch effizienteren Bandpassfiltern erreicht werden, welche auch ein Teil der Pt-TPFPP-Emission absorbieren, aber dafür jegliche Emission des CF vom $O_2$-Detektor fernhalten. Dafür muss der Filter erst oberhalb von $\lambda$ = 650 nm durchlässig werden.

In Figur 17B ist die Stern-Volmer-Auftragung der erfindungsgemäßen Dual-Optode zur Bestimmung von pH-Wert und Sauerstoffkonzentration gezeigt. Für jeden pH-Wert wurde der entsprechend gemessene $\tau_0$-Wert für die Berechnung des Quotienten verwendet. Dadurch ist kein direkter Zusammenhang zwischen dem pH-Wert und der $O_2$-Konzentration zu beobachteten. Der Mittelwert des $K_{sv}$-Wertes bei allen pH-Werten hat einen Wert von 6,0 L-mmol$^{-1}$ mit einem Fehler von 0,8 L·mmol$^{-1}$, der p-Wert wird mit 0,87$\pm$ 0,04 berechnet.

Die Ergebnisse der Bestimmungen mit der Dual-Optode zeigen, dass in der Praxis für jeden Sensor die $\tau_0$-Werte bei mindestens drei pH-Werten (2; 3; 6) und dann bei einem der drei pH-Werte jeweils bei zwei weiteren Sauerstoffkonzentrationen (10 vol%; 21 vol%) kalibriert werden müssen. Bevor die Probenmessungen durchgeführt werden können, werden demzufolge sechs verschiedene Kalibrierlösungen vermessen. Da die Bestimmung des pH-Wertes unabhängig von der Sauerstoffkonzentration ist, wird zunächst der pH-Wert der Probe bestimmt, um den richtigen $\tau_0$-Wert des $O_2$-Signals für die Kalibrierfunktion zur Berechnung der Sauerstoffkonzentration zu ermitteln.

Zusammenfassend gesagt, wurde eine erfindungsgemäße Optode erzeugt, welche die Messung des pH-Wertes mittels der Abklingzeit des Sensorfarbstoffs ermöglicht. In einem weiteren Ausführungsbeispiel wurde eine Optode bereitgestellt, mit welcher pH-Wert und Sauerstoffkonzentration über die Abklingzeit der verwendeten Sensorfarbstoffe ermittelt werden können.

Es besteht hierbei die Möglichkeit, über die Bestimmung der Abklingzeiten eine Signalseparation durchzuführen, da der pH-Sensor auf die Änderung der Fluoreszenz und der $O_2$-Sensor über die Messung der deutlich langsamer abklingenden Phosphoreszenz ermittelt wird.

Die vorgestellten Messungen wurden alle mit einer Dreifach-Faser mit unterschiedlichen Detektoren durchgeführt. Die Optodenmaterialien wurden auf einer Faserspitze aufgebracht. Die Trennung der Signale erfolgte in der Frequenzdomäne und der spektralen Lage der beiden Sensorfarbstoffe. Die pH-Messung zeigt keine Abhängigkeit zur Sauerstoffkonzentration, jedoch zeigt die Abklingzeit der $O_2$-Bestimmung ein vom pH-Wert abhängiges Signal. Durch

die Stern-Volmer-Auftragung und die damit verbundene Normierung mit der Abklingzeit ohne Löscherzusatz konnte diese Abhängigkeit für die Auswertung vernachlässigt werden. Diese Abklingzeit $\tau_0$ muss jedoch während der Kalibrierung für möglichst viele pH-Werte bestimmt werden, um eine genaue $O_2$-Konzentrationsbestimmung durchführen zu können. Aufgrund der guten spektralen Trennung der beiden Signale von CF und Pt-TPFPP ist auch eine Bestimmung der beiden Parameter mittels dieser Ausführungsform der erfindungsgemäßen Optode durch stationären Methoden möglich. Bei Anwendungen in komplexen Matrizes sollte jedoch die Bestimmung über die Messung der Abklingzeit bevorzugt werden, da hiermit Effekte von Hintergrundsignalen (zum Beispiel Autofluoreszenz der Probenbestandteile oder auch Beleuchtungslicht) korrigiert werden können.

Die optische Bestimmung des pH-Wertes gelingt beispielsweise mit der erfindungsgemäßen CF/SPEEK-Optode im sauren pH-Bereich, bei Verwendung der FD-S, der TD-S und auch mittels stationärer Messungen.
Der anfangs beobachtete Auswascheffekt wurde durch Temperaturbehandlung (Lagerung 12 h lang in 65 °C warmer Lösung) minimiert, wodurch ein Sensor mehrere Tage bis Wochen lang verwendet werden kann, ohne Verlust an Farbstoff in der Matrix durch Auswascheffekte. Die Emissionsspektren der CF/SPEEK-Optode zeigten keine Änderungen bei steigender Temperatur (5 °C < $\vartheta$ < 70 °C). Durch die Immobilisierung des CF wird die strahlungslose Deaktivierung minimiert, da das Molekül fest in der Matrix fixiert ist, weshalb nicht wie bei den Messungen in Lösung eine 50%ige Abnahme der Fluoreszenzintensität beobachtet wurde.

**Bestimmung von Chloridionenkonzentration, Sauerstoffkonzentration und pH-Wert mittels der erfindungsgemäßen Optode**

- pH-CF/SPEEK-(Pt-TPFPP)/P1-Lucigenin/PHPMA

Die Optode zur Bestimmung von pH-Wert und Sauerstoffkonzentration wurde um ein Sensormaterial zur Bestimmung der Chloridionenkonzentration ergänzt. Verwendet wird Lucigenin, das in Poly(2-hydroxypropylmethacrylat) (PHPMA) immobilisiert wurde. Die simultane Messung von pH-Wert und Sauerstoffkonzentration mit der erfindungsgemäßen Dual-Optode wurde bereits oben ausführlich erläutert.
Der Chloridionen-sensitive Farbstoff Lucigenin wurde in PHPMA immobilisiert und es wurden Chloridkonzentration mittels TD-S bestimmt.
Dieses Optodenmaterial kann beispielsweise gleichzeitig mit der Sauerstoffsensorik Pt-TPFPP/P1 P auf einer Faserspitze angewandt werden, da sowohl spektral als auch in der Zeit-Domäne keine Überlagerung vorliegt. Bei der Durchführung mit mehreren Modulationsfrequenzen im MHz- und kHz-Bereich wird auch die simultane Bestimmung von pH-Wert, Chloridionenkonzentration und Sauerstoffkonzentration möglich.
In Figur 19 wird die Bestimmung von Chloridionenkonzentrationen mittels einer Lucigenin/PHPMA-Optode gezeigt. Figur 20 zeigt die Stern-Volmer-Auftragung.

**Folgende Anordnungen und Vorrichtungen wurden für die durchgeführten Untersuchungen verwendet:**

**Absorptions- und Fluoreszenzspektroskopie**

Messungen von Absorptionsspektren erfolgten mit einem Zweistrahlspektrometer (Perkin Elmer Lambda 750 UV-VIS Spektrometer). Die stationären Fluoreszenzspektren wurden mit einem FluoroMax3-P (Jobin Yvon Horiba) aufgenommen. Für Referenzmessungen zur Phasenmodulationsspektroskopie wurden zeitaufgelöste Messungen mit einem Fluoromax4 (Jobin Yvon Horiba) im TCSPC- oder MCS-Modus durchgeführt. Außerdem wurden mit einem Fluoreszenzspektrometer (Edinburgh Instruments FLS920) TD-S Messungen durchgeführt. Für die TD-S-Messungen mit optischen Fasern wurde das Signal mit dem Oszilloskop WaveRunner 104MXi-A von LeCroy aufgenommen. Die Anregung erfolgte mit einer bei 405 nm emittierenden Laserdiode (L, NICHIA NDV4313), welche mittels Funktionsgenerators (Tektronix AFG 3102) gepulst wurde.

Des Weiteren wurde im Rahmen der Erfindung mit dem Faserspektrometer (ALS Co. SEC2000 Spectra System) gearbeitet. Für Absorptionsmessungen wird die Intensität mit einer integrierten Weißlichtquelle vor Beginn der eigentlichen Messung als Referenzspektrum gemessen. Die Intensität bei verschiedenen Wellenlängen wird auf dem CCD-Chip mittels einer einzigen Messung erfasst, wodurch ein Spektrum über den gesamten spektralen Bereich, von 250 nm bis 900 nm, gemessen werden kann. Das Spektrometer wurde im Absorptions- und Fluoreszenzmodus betrieben. Zur Abschwächung des Anregungssignals, bei Aufnahme von Fluoreszenzspektren, wurde ein Langpass-Filter (Grenzwellenlänge bei 450 nm Thorlabs FEL0450) vor dem Detektor platziert. Zur Anregung wurde eine 450 nm Laserdiode (NICHIA NDB7875) oder die oben erwähnte 405 nm Laserdiode verwendet.

**Phasenmodulationsspektroskopie**

Modulation im kHz-Bereich

Für die Sauerstoffsensorik mit dem Farbstoff Pt-TPFPP wurde die Frequenz von 9,24 kHz von einem Funktionsgenerator (ELV-MFG 9001 M) in einen Zwei-Kanal-Lock-In-Verstärker (EG&G Instruments) eingekoppelt, welcher dieses mit einer Frequenz von 4,6 kHz überlagert. Eine 405 nm Laserdiode (NICHIA NDV4313) wird dann über die Modulation der Stromversorgung eines Lasertreibers (Stanford Research System LDC501) mit diesen beiden Frequenzen versorgt. Die Laserdiode (LD) und die Avalanche Photodiode (APD) sind in einem Triplexer eingebaut (hergestellt von der Firma Optricon in Zusammenarbeit mit der Physikalische Chemie der Universität Potsdam). Sowohl das intensitätsmodulierte Anregungslicht als auch das Emissionssignal wird innerhalb des Triplexers in die Faser eingekoppelt bzw. von der Faser auf die APD geleitet.
Das Sensorsignal wird über einen dichroitischen Strahlenteiler (ST, durchlässig für das blaue Anregungslicht, reflektiert das rote Emissionssignal) und nach Passieren eines zusätzlichen Bandpassfilters (BP; Semrock BrightLine R Fluoreszenzfilter 607/70) auf eine Avalanche Photodiode (APD) geleitet. Der gemessene Strom wird mittels HF-Verstärker der Firma FEMTO (DCPCA 20) erhöht und anschließend im Lock-In-Verstärker die Phasenverschiebung relativ zum Anregungslicht bestimmt. Die Datenanalyse erfolgt mit einem Visual-Basic-basierten Programm (Entwicklung von Dr. E. Schmälzlin in der Physikalischen Chemie der Universität Potsdam), welches die Abklingzeit und Sauerstoffkonzentration berechnet. Im verwendeten Opal-System (Colibri Photonics GmbH) sind der Frequenzgenerator und der Lock-In-Verst¨arker in einem Gerät integriert. Der Aufbau ist dadurch transportabeler geworden. Durch die Weiterentwicklung des Opal-Systems zum Opal2 wurden alle nötigen elektronischen sowie optischen Komponenten (Triplexer) in einem tragbaren Gerät vereint.

Modulation im MHz-Bereich

Das Aufbauprinzip entspricht dem der für die Sauerstoffsensorik verwendet wurde, jedoch arbeiten die verwendeten Geräte im MHz-Bereich. Hier wird nur bei einer Modulationsfrequenz gearbeitet, weshalb der Zweikanal-Lock-In-Verstärker ohne Dual-Referenz-Funktion (Stanford Research Systems SR844) verwendet wurde. Die Frequenz von 30 MHz (wenn nicht anders angegeben) wird mit einem Funktionsgenerator (Tektronix AFG 3102) als Referenz eingekoppelt, ebenso in einen Lasertreiber (ELOVIS (electronics-opticssolutions), DynaLase-C System).
Die Modulation der Intensität einer 405 nm LD (NICHIA NDV4313), bzw. einer 450 nm (NICHIA NDB7875) oder 470 nm LD (NICHIA NDA4611 E) wurde durch Modulierung der vom Lasertreiber ausgebenen Stromstärke erreicht. Das Emissionssignal mit einem Photomultiplier (Hamamatsu H6780-20) detektiert und mit einem HF-Verstärker (FEMTO DHPCA-100) verstärkt. Die Separation vom Anregungslicht erfolgte mittels Bandpassfilter der Firma Semrock (BrightLine R Fluoreszenzfilter 550/88). Der Lock-In-Verstärker wurde mit einer Labview-basierten Software ausgelesen.

Modulation in zwei Frequenzbereichen: Dual-Optode SPEEK/CF-Pt-TPFPP/P1

Wie in Figur 18 gezeigt, wurde eine 405 nm Laserdiode abwechselnd mit 30 MHz und 9,24/4,62 kHz moduliert. Das Anregungslicht wurde in eine Faser (Durchmesser 430 μm) eingekoppelt und über eine Steckverbindung in eine 1 mm Faser geleitet. Auf deren Spitze wurde sowohl das pH-Optodenmaterial als auch die das Sauerstoff-sensitive Optodenmaterial aufgebracht. Das Emissionssignal wurde über zwei 430 μm Fasern zum jeweiligen Detektor geleitet. Für die Sauerstoffbestimmung wurde wie oben beschrieben zunächst der Triplexer verwendet, für einige Messung der Hamamatsu-PMT (H10723-20) mit vorgesetztem Filtern von Semrock (BrightLine R Fluoreszenzfilter 607/70 für Ru-basierten Farbstoff; BrightLine R FF01-635/LP-25 für Pt-basierten und BrightLine R FF01-675/67-25 für Pd-basierten Farbstoff).

## Patentansprüche

1. Optode zur Bestimmung von chemischen Parametern einer Probe, **dadurch gekennzeichnet, dass** die Optode eine Polymermatrix umfasst, die ein sulfoniertes Polyetheretherketon (SPEEK) umfasst, in welcher ein Sensorfarbstoff immobilisiert ist oder mehrere Sensorfarbstoffe immobilisiert sind, wobei mindestens einer der immobilisierten Sensorfarbstoffe pH-sensitiv ist.

2. Optode gemäß Anspruch 1, **dadurch gekennzeichnet, dass** in dem sulfonierten Polyetheretherketon (SPEEK) mindestens ein weiterer Sensorfarbstoff immobilisiert ist.

3. Optode gemäß Anspruch 1 oder Anspruch 2, **dadurch gekennzeichnet, dass** sie mindestens eine weitere Polymermatrix umfasst, in welcher mindestens ein weiterer Sensorfarbstoff immobilisiert ist.

4. Optode gemäß Anspruch 2 oder 3, **dadurch gekennzeichnet, dass** der mindestens eine weitere Sensorfarbstoff ausgewählt ist aus Sauerstoff-sensitiven, Halogenidionen-sensitiven, Natriumionen-sensitiven, Kaliumionen-sensitiven, pH-sensitiven und Calciumionen-sensitiven Farbstoffen.

5. Optode gemäß einem der Ansprüche 1 bis 4, **dadurch gekennzeichnet, dass** der pH-sensitive Sensorfarbstoff ausgewählt ist aus 4-{4-[4-(Dipentylamino)phenyl]-1,3-butadienyl}-1-(4-sulfobutyl)-pyridiniumhydroxid (RH421, Bis-(1,3-Dibutylbarbitursäure)-trimethinoxonol ($Dibac_4(3)$), 6-Carboxyfluorescein (CF) und 5(6)-Carboxy-2',7'-dichlorfluorescein (Cl-CF) und 8-Hydroxy-1,3,6-pyrentrisulfonsäure-Trinatriumsalz (HPTS).

6. Optode gemäß einem der vorangehenden Ansprüche, **dadurch gekennzeichnet, dass** der Sauerstoff-sensitive Farbstoff ausgewählt ist aus Pt(II)meso-Tetra(pentafluorphenyl)porphyrin (Pt-TPFPP), Pd(II)meso-Tetra(pentafluorphenyl)porphyrin, Ruthenium(II)-Tris(4,7-diphenyl-1,10-phenanthrolin)-perchlorat (Ru-pCl) und Ruthenium(II)-Tris(4,7-diphenyl-1,10-phenanthrolin)-dichlorid.
der Halogenidionen-sensitive Farbstoff ausgewählt ist aus den Chloridionen-sensitiven Farbstoffen N,N'-Dimethyl-9,9'-bisacridiniumnitrat (Lucigenin), 6-Methoxy-N-(3-sulfopropyl)chinolinium (SPQ) und N-(Ethoxycarbonylmethyl)-6-methoxychinoliniumbromid (MQAE);
der Natriumionen-sensitive Farbstoff ausgewählt ist aus N,N'-[1,4,10-Trioxa-7,13-diazacyclopentadecan-7,13-diylbis(2,5-dimethoxy-4,1-phenylen)]bis[3',6'-bis(acetyloxy)-2',7'-dichlor-3-oxo-spiro[isobenzofuran-1(3H),9'-[9H]xanthen]-5-carboxamid, (Sodium Green ®) und N-(4-[1-(7-Diethylaminocumarin-3-yl)-1H-1,2,3-triazol-4yl]phenylaza-18-Krone-6-Ether;
der Kaliumionen-sensitive Farbstoff N-(2-Methoxyethoxy)phenylaza-18-Krone-6)-4-(cumarinyl)-1H-1,2,3-triazol ist, der Calciumionen-sensitive Farbstoff ausgewählt ist aus N-[2-[(acetyloxy)methoxy]-2-oxoethyl]-N-[4-[[[3',6'-bis(acetyloxy)-2',7'-difluor-3-oxospiro[isobenzofuran-1 (3H),9'-[9H]xanthen]-5-yl]carbonyl]amino]-2-[2-[2-[bis[2-[(acetyloxy)methoxy]-2- oxoethyl]-amino]phenoxy]ethoxy]phenyl]-glycin-(acetyloxy)methyl ester (Oregon Green™ 488 BAPTA-1), N-[2-[2-[2-[bis(carboxymethyl)amino]-5-[[(2',7'-difluor-3',6'-dihydroxy-3-oxospiro[isobenzofuran-1(3H),9'-[9H]xanthen]-5-yl)carbonyl]amino]phenoxy]ethoxy]-6-fluorphenyl]-N-(carboxymethyl)-glycinhexakaliumsalz (Oregon Green™ 488 BAPTA-6F) und N-[2-[2-[2-[bis(carboxymethyl)amino]-5-[[(2',7'-difluor-3',6'-dihydroxy-3-oxospiro[isobenzofuran-1(3H),9'-[9H]xanthen]-5-yl)carbonyl]amino]phenoxy]ethoxy]-5-nitrophenyl]-N-(carboxymethyl)-glycinhexakaliumsalz (Oregon Green™ 488 BAPTA-5N).

7. Optode gemäß einem der Ansprüche 3 bis 6, **dadurch gekennzeichnet, dass** das Polymer der mindestens einen weiteren Polymermatrix ausgewählt ist aus Poly(2,2,2-trifluorethylmethacrylat (P1), Poly(2-hydroxypropylmethacrylat) (PHPMA), Poly(2-hydroxyethylmethacrylat) (PHEMA), Polyurethan (PU), Polyvinylpyrrolidon (PVP), Poly(1-vinylpyrrolidon)-co-styrol (PVPS), Polyvinylchlorid (PVC), Polyacrylnitri-Polyacrylamid-Blockcopolymer (HYPAN HN 80) und Polystyrol.

8. Optode gemäß einem der vorangehenden Ansprüche, **dadurch gekennzeichnet, dass** der pH-sensitive Farbstoff 6-Carboxyfluorescein (CF) oder 5(6)-Carboxy-2',7'-dichlorfluorescein (Cl-CF) ist, die weitere Polymermatrix eine Poly(2,2,2-trifluorethylmethacrylat)-Matrix ist und der Sauerstoff-sensitive Farbstoff Pt(II)meso-Tetra(pentafluorphenyl)-porphyrin oder Pd(II)meso-Tetra(pentafluorphenyl)porphyrin ist.

9. Optode gemäß einem der Ansprüche 3 bis 8, **dadurch gekennzeichnet, dass** die Optode zwei weitere Polymermatrizes umfasst, wobei die erste weitere Polymermatrix das Polymer Poly(2-hydroxypropylmethacrylat) umfasst, in welchem der Chloridionen-sensitive Farbstoff N,N'-Dimethyl-9,9'-bisacridiniumnitrat immobilisiert ist, und die zweite, weitere Polymermatrix das Polymer Poly(2,2,2-trifluorethylmethacrylat) umfasst, in welchem der Sauerstoff-sensitive Farbstoff Pt(II)meso-Tetra-(pentafluorphenyl)porphyrin (Pt-TPFPP) oder Pd(II)meso-Tetra(pentafluorphenyl)porphyrin (Pd-TPFPP) immobilisiert ist.

10. Optode gemäß einem der Ansprüche 1 bis 9, **dadurch gekennzeichnet, dass** auf der Polymerschicht, in welcher der Sensorfarbstoff immobilisiert ist oder zwischen den weiteren Polymerschichten, in welchen einer oder mehrere Sensorfarbstoffe immobilisiert sind, eine weitere Schicht oder mehrere weitere Schichten aufgebracht sind, wobei kein Sensorfarbstoff in dieser mindestens einen weiteren Trennungsschicht immobilisiert ist.

11. Optode gemäß einem der vorangehenden Ansprüche, **dadurch gekennzeichnet, dass** die Optode mindestens ein Substrat umfasst, auf welchem die eine oder die mehreren Polymermatrizes und die darin immobilisierten

Sensorfarbstoffe fixiert sind.

**12.** Optode gemäß Anspruch 11, **dadurch gekennzeichnet, dass** das mindestens eine Substrat ausgewählt ist aus Glassubstraten oder Polymersubstraten.

**13.** Optode gemäß Anspruch 11 oder 12, **dadurch gekennzeichnet, dass** das Substrat aus einer Polymermatrix gebildet wird, in welcher ein Sensorfarbstoff immobilisiert ist.

**14.** Optode gemäß einem der Ansprüche 1 bis 13, **dadurch gekennzeichnet, dass** sie mit einem oder mehreren Lichtleitern verbunden ist oder Teil eines Lichtleiters ist.

**15.** Verfahren zur Bestimmung des pH-Werts einer Probe, **dadurch gekennzeichnet, dass** man eine Optode gemäß den Ansprüchen 1 bis 14 verwendet.

**16.** Verfahren gemäß Anspruch 15, dass man zusätzlich die Kohlendioxidkonzentration und/oder die Ammoniakkonzentration und/oder die Sauerstoffkonzentration und/oder Halogenidionenkonzentration und/oder die Natriumionenkonzentration und/oder die Kaliumionenkonzentration und/oder die Calciumionenkonzentration der Probe bestimmt und man die Bestimmung der Parameter simultan oder zeitversetzt durchführt.

**17.** Verfahren gemäß einem der Ansprüche 15 bis 16, **dadurch gekennzeichnet, dass** man die Bestimmung des Parameters bzw. der Parameter stationär oder zeitaufgelöst durchführt und die Bestimmung des Parameters bzw. der Parameter mittels Mikroskop, CCD-Kamera Reflexionsspektroskopie, Fluoreszenzspektrokopie, Time-Domain-Spectroskopie und/oder Phasenmodulationsspektroskopie durchführt.

## Claims

**1.** Optode for the determining of chemical parameters of a sample, **characterized in that** the optode consists of a polymer matrix that in turn consists of a sulfonated polyether ether ketone (SPEEK) in which a sensor dye is immobilized or several sensor dyes are immobilized, wherein at least one of the immobilized sensor dyes is pH-sensitive.

**2.** Optode according to claim 1, **characterized in that** at least one further sensor dye is immobilized in the sulfonated polyether ether ketone (SPEEK).

**3.** Optode according to claim 1 or 2, **characterized in that** it consists of at least one further polymer matrix, in which at least one further sensor dye is immobilized.

**4.** Optode according to claim 2 or 3, **characterized in that** the at least one further sensor dye is selected from oxygen-sensitive, halide ion-sensitive, sodium ion-sensitive, potassium ion-sensitive, pH-sensitive and calcium ion-sensitive dyes.

**5.** Optode according to one of the claims 1 to 4, **characterized in that** the pH-sensitive sensor dye is selected from 4-{4-[4-(dipentylamino)phenyl]-1,3-butadienyl}-1-(4-sulfobutyl)pyridinium hydroxide (RH421, bis-(1,3-dibutylbarbituric acid)trimethineoxonol (Dibac$_4$(3)), 6-carboxyfluorescein (CF), and 5(6)-carboxy-2',7'-dichlorofluorescein (Cl-CF) and 8-hydroxy-1,3,6-pyrenetrisulfonic acid-trisodium salt (HPTS).

**6.** Optode according to any one of the preceding claims, **characterized in that** the oxygen-sensitive dye is selected from Pt (II) meso-tetra(pentafluorophenyl)porphyrin (Pt-TPFPP), Pd(II)meso-tetra(pentafluorophenyl)porphyrin, ruthenium(II)-tris(4,7-diphenyl-1,10-phenanthroline)-perchlorate (Ru-pCl) and ruthenium(II)-tris(4,7-diphenyl-1,10-phenanthroline) dichloride;
the halide-sensitive dye is selected from the chloride ion-sensitive dyes N, N'-dimethyl-9, 9'-bisacridiniumnitrate (Lucigenin), 6-methoxy-N-(3-sulfopropyl) quinolinium (SPQ), and N- (ethoxycarbonylmethyl)-6-methoxyquinolinium bromide (MQAE);
the sodium ion-sensitive dye is selected from N,N'-[1,4,10-trioxa-7,13-diazacyclopentadecane-7,13-diylbis(2,5-dimethoxy-4,1-phenylene)]bis[3',6'-bis(acetyloxy)-2',7'-dichloro-3-oxo-spiro[isobenzofuran-1(3H),9'-[9H]xanthen]-5-carboxamide, (Sodium Green ®) and N-(4-[1-(7-diethylaminocoumarin-3-yl)-1 H-1,2,3-triazol-4yl]phenylaza-18-crown-6-ether;

the potassium ion-sensitive dye is N-(2-methoxyethoxy)phenylaza-18-crown-6)-4-(coumarinyl)-1 H-1,2,3-triazol, the calcium ion-sensitive dye selected is from N-[2-[(acetyloxy)methoxy]-2-oxoethyl]-N-[4-[[[3',6'-bis(acetyloxy)-2',7'-difluoro-3-oxospiro[isobenzofuran-1 (3H),9'-[9H]xanthen]-5-yl]carbonyl]amino]-2-[2-[2-[bis[2-[(acetyloxy)methoxy]-2-oxoethyl]amino]phenoxy]ethoxy]phenyl]-glycine-(acetyloxy)methyl ester (Oregon Green ™ 488 BAPTA-1), N-[2-[2-[2-[bis(carboxymethyl)amino]-5-[[(2',7'-difluoro-3',6'-dihydroxy-3-oxospiro[isobenzofuran-1(3H),9'-[9H]xanthen]-5-yl)carbonyl]amino]phenoxy]ethoxy]-6-fluorophenyl]-N-(carboxymethyl)-glycine-hexapotassium salt (Oregon Green™ 488 BAPTA-6F) and N-[2-[2-[2-[bis(carboxymethyl)amino]-5-[[(2',7'-difluoro-3',6'-dihydroxy-3-oxospiro[isobenzofuran-1(3H),9'-[9H]xanthen]-5-yl)carbonyl]amino]phenoxy]ethoxy]-5-nitrophenyl]-N-(carboxymethyl)-glycine-hexapotassium salt (Oregon Green™ 488 BAPTA-5N).

**7.** Optode according to one of the claims 3 to 6, **characterized in that** the polymer of at least one further polymer matrix selected is of poly(2,2,2-trifluoroethylmethacrylate (P1), poly(2-hydroxypropylmethacrylate) (PHPMA), poly(2-hydroxyethylmethacrylate) (PHEMA), polyurethane (PU), polyvinylpyrrolidone (PVP), poly(1-vinylpyrrolidone)-co-styrene (PVPS), polyvinylchloride (PVC), polyacrylonitrile-polyacrylamideblockcopolymer (HYPAN HN 80) and polystyrene.

**8.** Optode according to one of the preceding claims, **characterized in that** the pH-sensitive dye is 6-carboxyfluorescein (CF) or 5(6)-carboxy-2',7'-dichlorofluorescein (Cl-CF), the further polymer matrix is a poly(2,2,2-trifluoroethylmethacrylate) matrix and the oxygen-sensitive dye is Pt(II)meso-tetra(pentafluorophenyl)porphyrin or Pd(II)meso-Tetra(pentafluorophenyl)porphyrin.

**9.** Optode according to any one of claims 3 to 8, **characterized in that** the optode comprises two polymer matrices, wherein the first additional polymer matrix consists of the polymer poly(2-hydroxypropylmethacrylate), in which the chloride ion-sensitive dye N,N'-dimethyl-9,9'-bisacridiniumnitrate is immobilized, and the second further polymer matrix consists of the polymer poly(2,2,2-trifluoroethylmethacrylate), in which the oxygen-sensitive dye Pt(II)meso-tetra(pentafluorophenyl)porphyrin (Pt-TPFPP) or Pd(II)meso-Tetra(pentafluorophenyl)porphyrin (Pd-TPFPP) is immobilized.

**10.** Optode according to one of claims 1 to 9, **characterized in that** on the polymer layer, in which the sensor dye is immobilized, or between the further polymer layers in which one or more sensor dyes are immobilized, a further layer or several further layers are applied, wherein no sensor dye is immobilized in these one or more separation layers.

**11.** Optode according to any one of the preceding claims, **characterized in that** the optode includes at least one substrate on which one or several polymer matrices, and the sensor dyes immobilized there, are fixed.

**12.** Optode according to claim 11, **characterized in that** it is at least one substrate is selected from glass substrates or polymer substrates.

**13.** Optode according to claim 11 or 12, **characterized in that** the substrate consists of a polymer matrix, in which a sensor dye is immobilized.

**14.** Optode according to any one of the claims 1 to 13, **characterized in that** it is connected with one or more optical fibers or part of an optical fiber.

**15.** A method for determining the pH of a sample, **characterized in that** one optode is used according to claims 1 to 14.

**16.** Method according to claim 15 that additionally determines carbon dioxide concentration and/or ammonia concentration and/or oxygen concentration and/or halide ion concentration and/or sodium ion concentration and/or potassium ion concentration and/or calcium ion concentration of the sample and the parameters can be determined simultaneously or time-shifted.

**17.** A method according to any one of claims 15 to 16, **characterized in that** determination of the parameter or parameters is performed as stationary or time-resolved and the determination of the parameter or parameters is performed using a microscope, CCD camera, reflection spectroscopy, fluorescence spectroscopy, time-domain spectroscopy and / or phase modulation spectroscopy.

## Revendications

1. Optode pour la détermination de paramètres chimiques d'un échantillon, **caractérisée en ce que** ladite optode comprend une matrice polymère contenant un polyétheréthercétone sulfoné (SPEEK) dans lequel est immobilisé au moins un colorant de détection, au moins un des colorants de détection immobilisés étant sensible au pH.

2. Optode selon la revendication 1, **caractérisée en ce qu'**au moins un autre colorant de détection est immobilisé dans le polyétheréthercétone sulfoné (SPEEK).

3. Optode selon la revendication 1 ou la revendication 2, **caractérisée en ce que** celle-ci comprend au moins une autre matrice polymère dans laquelle est immobilisé au moins un autre colorant de détection.

4. Optode selon la revendication 2 ou la revendication 3, **caractérisée en ce que** ledit au moins un autre colorant de détection est sélectionné parmi des colorants sensibles à l'oxygène, sensibles aux ions d'halogénure, sensibles aux ions de sodium, sensibles aux ions de potassium, sensibles au pH et sensibles aux ions de calcium.

5. Optode selon l'une des revendications 1 à 4, **caractérisée en ce que** le colorant de détection sensible au pH est sélectionné parmi 4-{4-[4-(diphénylamino)phényl]-1,3-butadiényl}-1-(4-sulfobutyle) hydroxyde de pyridinium (RH421, bis-(acide-1,3 dibutylbarbiturique)-oxonol triméthinique (dibac$_4$(3)), 6-carboxyfluorescéine (CF) et 5(6)-carboxy-2',7'-dichlorofluorescéine (Cl-CF) et acide 8-hydroxy-1,3,6-pyrène trisulfonique-sel trisodique (HPTS).

6. Optode selon l'une des revendications précédentes, **caractérisée en ce que** le colorant de détection sensible à l'oxygène est sélectionné parmi Pt(II)méso-tétra(pentafluorophényl)porphyrine (Pt-TPFPP), Pd(II)méso-tétra(pentafluorophényl)porphyrine, ruthénium(II)-tris(4,7-diphényl-1,10-phénanthroline)-perchlorate (Ru-pCl) et ruthénium(II)-tris(4,7-diphényl-1,10-phénanthroline)-dichlorure;
le colorant de détection sensible aux ions d'halogénure est sélectionné parmi les colorants sensibles aux ions de chlorure N,N'-diméthyl-9,9'-bisacridiniumnitrate (lucigénine), 6-méthoxy-N-(3-sulfopropyl)-quinolinium (SPQ) et N-(éthoxycarbonylméthyl)-6-méthoxyquinolinium bromide (MQAE);
le colorant de détection sensible aux ions de sodium est sélectionné parmi N,N'-[1,4,10-trioxa-7,13-diazacyclopentadécane-7,13-diylbis(2,5-diméthoxy-4,1-phénylène)]bis[3',6'-bis(acétyloxy)-2',7'-dichlor-3-oxo-spiro[isobenzofurane-1(3H),9'-[9H]xanthène]-5-carboxamide, (Sodium Green ®) et N-(4-[1-(7-diéthylaminocoumarine-3-yl)-1H-1,2,3-triazol-4yl]phénylaza-éther 18-couronne-6 ;
le colorant de détection sensible aux ions de potassium est N-(2-méthoxyéthoxy)phénylaza-éther 18-couronne-6)-4-(coumarinyle)-1H-1,2,3-triazole,
le colorant de détection sensible aux ions de calcium est sélectionné parmi N-[2-[(acétyloxy)méthoxy]-2-oxoéthyle]-N-[4-[[[3',6'-bis(acétyloxy)-2',7'-difluoro-3-oxospiro[isobenzofurane-1 (3H),9'-[9H]xanthène]-5-yl]carbonyl]amino]-2-[2-[2-[bis[2-[(acétyloxy)méthoxy]-2- oxoéthyle]-amino]phénoxy]éthoxy]phényle]-glycine-(acétyloxy)méthyl ester (Oregon Green™ 488 BAPTA-1), N-[2-[2-[2-[bis(carboxyméthyl)amino]-5-[[(2',7'-difluoro-3',6'-dihydroxy-3-oxospiro[isobenzofurane-1 (3H),9'-[9H]xanthène]-5-yl)carbonyl]amino]phénoxy]éthoxy]-6-fluorophényle]-N-(carboxyméthyle)-glycine-sel d'hexapotassium (Oregon Green™ 488 BAPTA-6F) et N-[2-[2-[2-[bis(carboxyméthyl)amino]-5-[[(2',7'-difluoro-3',6'-dihydroxy-3-oxospiro[isobenzofurane-1 (3H),9'-[9H]xanthène]-5-yl)carbonyl]amino]phénoxy]éthoxy]-5-nitrophényle]-N-(carboxyméthyle)-glycine- sel d'hexapotassium (Oregon Green™ 488 BAPTA-5N).

7. Optode selon l'une des revendications 3 à 6, **caractérisée en ce que** le polymère de ladite au moins une autre matrice polymère est sélectionné parmi poly(2,2,2-trifluoroéthylméthacrylate (P1), poly(2-hydroxypropylméthacrylate) (PHPMA), poly(2-hydroxyéthylméthacrylate) (PHEMA), polyuréthane (PU), polyvinylpyrrolidone (PVP), poly(1-vinylpyrrolidone)-co-styrène (PVPS), chlorure de polyvinyle (PVC), copolymère bloc polyacrylnitrile-polyacrylamide (HYPAN HN 80) et polystyrène.

8. Optode selon l'une des revendications précédentes, **caractérisée en ce que** le colorant sensible au pH est 6-carboxyfluorescéine (CF) ou 5(6)-carboxy-2',7'-dichlorofluorescéine (Cl-CF), l'autre matrice polymère est une matrice poly(2,2,2-trifluoroéthylméthacrylate) et le colorant sensible à l'oxygène est Pt(II)méso-tétra(pentafluorophényl)porphyrine ou Pd(II)méso-tétra(pentafluorophényl)porphyrine.

9. Optode selon l'une des revendications 3 à 8, **caractérisée en ce que** ladite optode comprend deux autres matrices polymères, la première autre matrice polymère contenant le polymère poly(2-hydroxypropy-Iméthacrylate), dans lequel est immobilisé le colorant sensible aux ions de chlorure N,N'-diméthyl-9,9'-bisacridiniumnitrate, et la deuxième autre matrice polymère contenant le polymère poly(2,2,2-trifluoroéthylméthacrylate), dans lequel est immobilisé le

colorant sensible à l'oxygène Pt(II)méso-tétra(pentafluorophényl)porphyrine (Pt-TPFPP) ou Pd(II)méso-tétra(pentafluorophényl)porphyrine (Pd-TPFPP).

**10.** Optode selon l'une des revendications 1 à 9, **caractérisée en ce qu'**au moins une autre couche est appliquée sur la couche polymère dans laquelle est immobilisé le colorant de détection ou entre les autres couches polymères où est immobilisé au moins un colorant de détection, aucun colorant de détection n'étant immobilisé dans ladite au moins une autre couche de séparation.

**11.** Optode selon l'une des revendications précédentes, **caractérisée en ce que** ladite optode comprend au moins un substrat, sur lequel est fixée ladite au moins une matrice polymère et les colorants de détection qui y sont immobilisés.

**12.** Optode selon la revendication 11, **caractérisée en ce que** ledit au moins un substrat est sélectionné parmi des substrats en verre ou des substrats en polymère.

**13.** Optode selon la revendication 11 ou la revendication 12, **caractérisée en ce que** le substrat est formé dans une matrice polymère dans laquelle est immobilisé un colorant de détection.

**14.** Optode selon l'une des revendications 1 à 13, **caractérisée en ce que** celle-ci est reliée à un ou plusieurs guides d'ondes optiques ou fait partie d'un guide d'ondes optiques.

**15.** Procédé de détermination de la valeur pH d'un échantillon, **caractérisé en ce qu'**une optode selon les revendications 1 à 14 est utilisée.

**16.** Procédé selon la revendication 15, **caractérisé en ce que** la concentration de dioxyde de carbone et/ou la concentration d'ammoniac et/ou la concentration d'oxygène et/ou la concentration d'ions d'halogénure et/ou la concentration d'ions de sodium et/ou la et/ou la concentration d'ions de calcium de l'échantillon sont en outre déterminées, et **en ce que** la détermination des paramètres est effectuée simultanément ou avec un décalage temporel.

**17.** Procédé selon l'une des revendications 15 à 16, **caractérisé en ce que** la détermination du ou des paramètres est effectuée de manière fixe ou avec résolution temporelle, et **en ce que** la détermination du ou des paramètres est effectuée au moyen d'un microscope, d'une spectroscopie de réflexion par caméra CCD, d'une spectroscopie de fluorescence, d'une spectroscopie temps-domaine et/ou d'une spectroscopie à modulation de phase.

*Figur 1A*

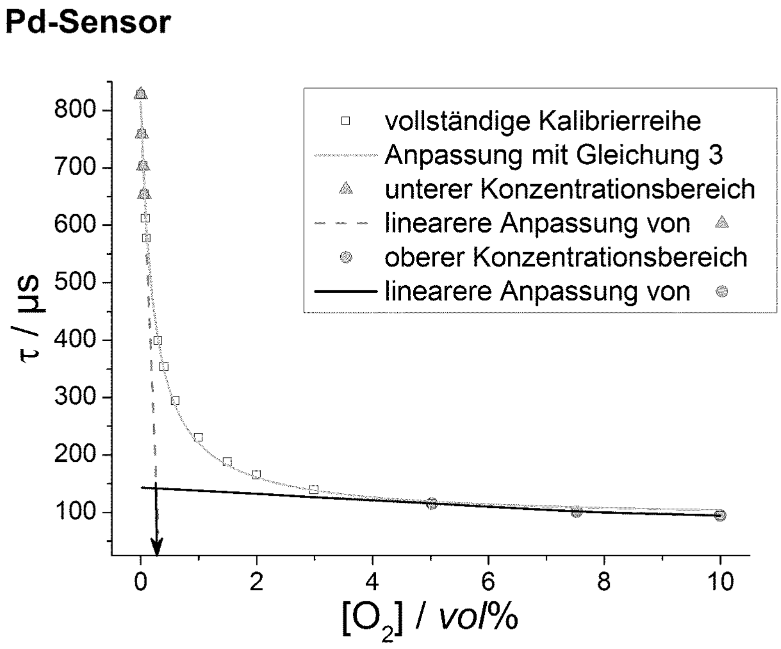


*Figur 1 B*

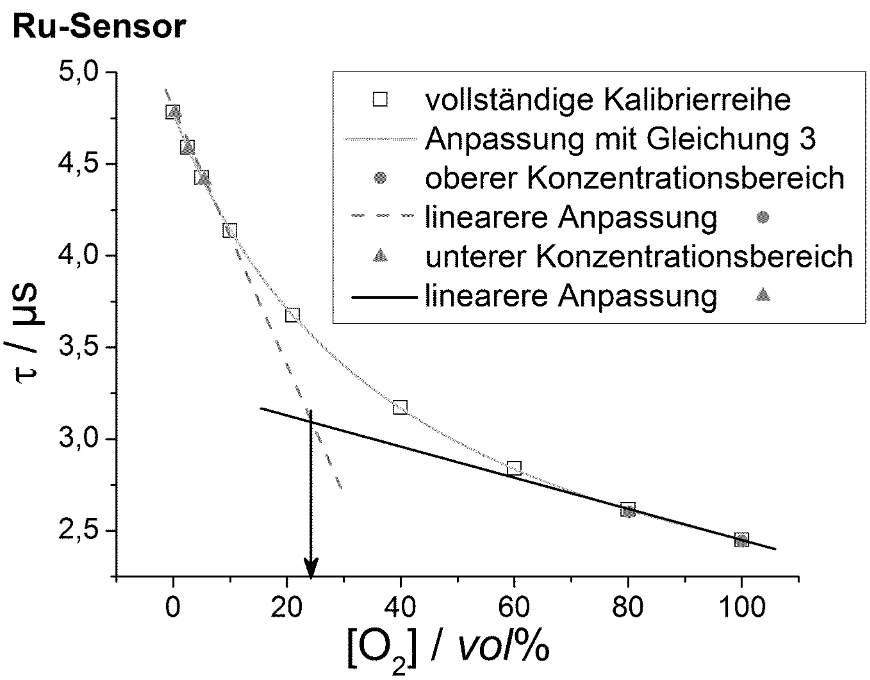

*Figur 2 A*

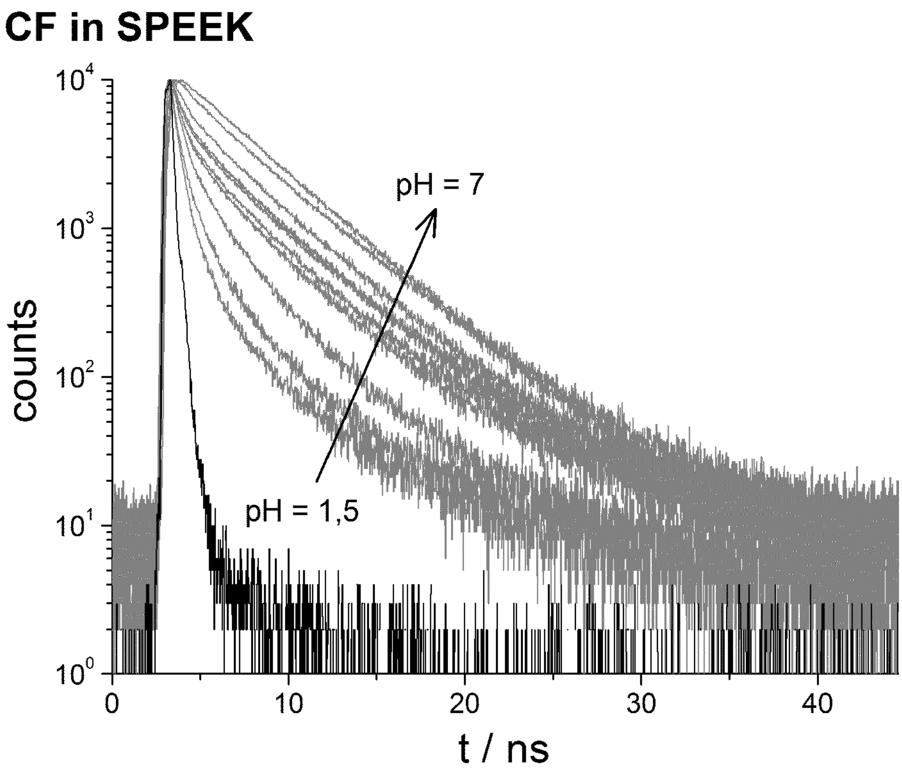


*Figur 2 B*

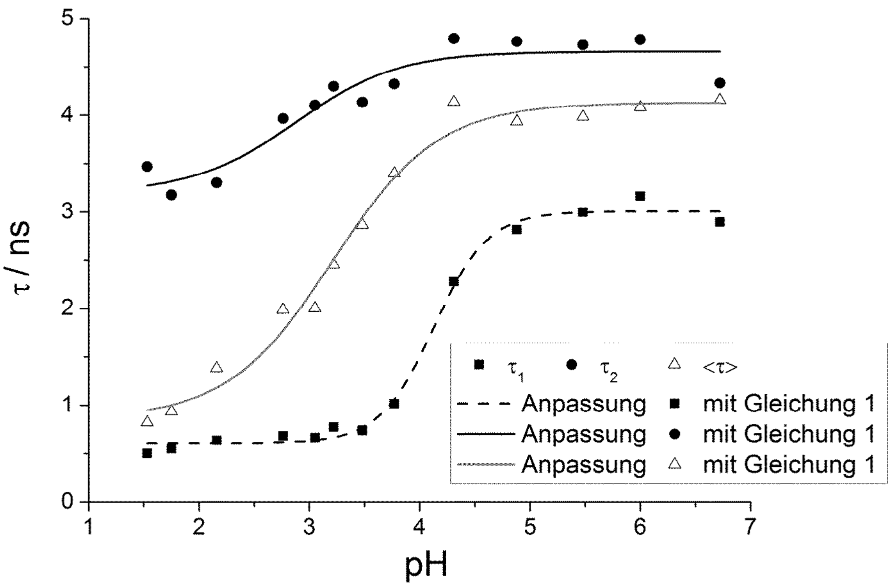

*Figur 3 A*

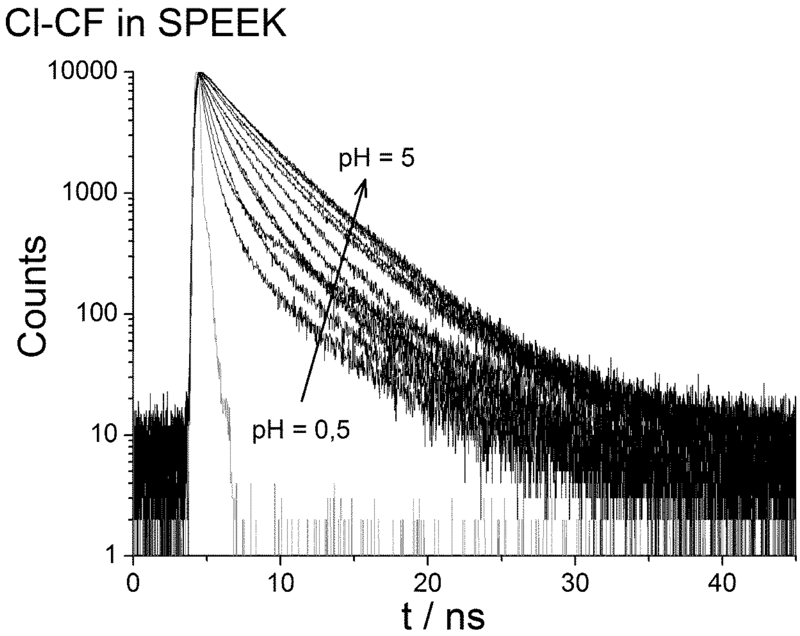


*Figur 3 B*

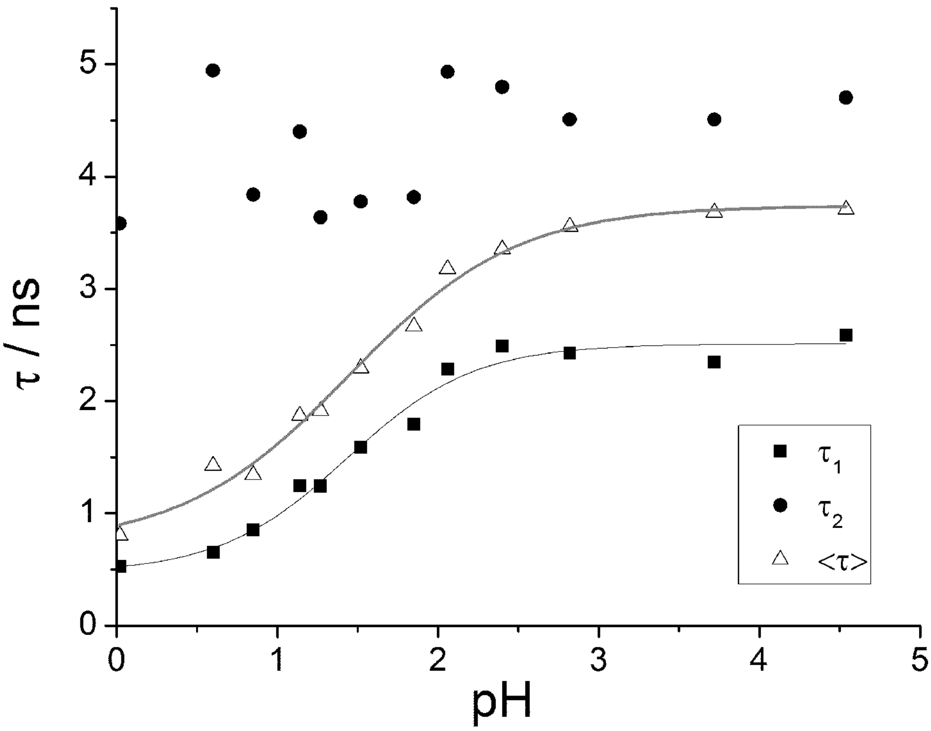

*Figur 4*

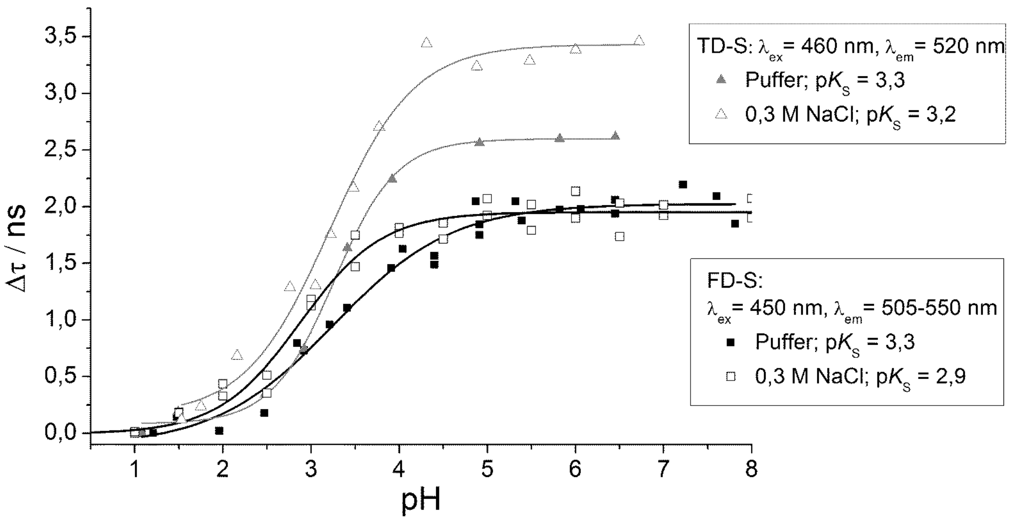
TD-S: λex= 460 nm, λem= 520 nm
Puffer; pKS = 3,3
0,3 M NaCl; pKS = 3,2
FD-S:
λex= 450 nm, λem= 505-550 nm
Puffer; pKS = 3,3
0,3 M NaCl; pKS = 2,9
Δτ / ns
pH
3,5
3,0
2,5
2,0
1,5
1,0
0,5
0,0
1
2
3
4
5
6
7
8

*Figur 5 A*

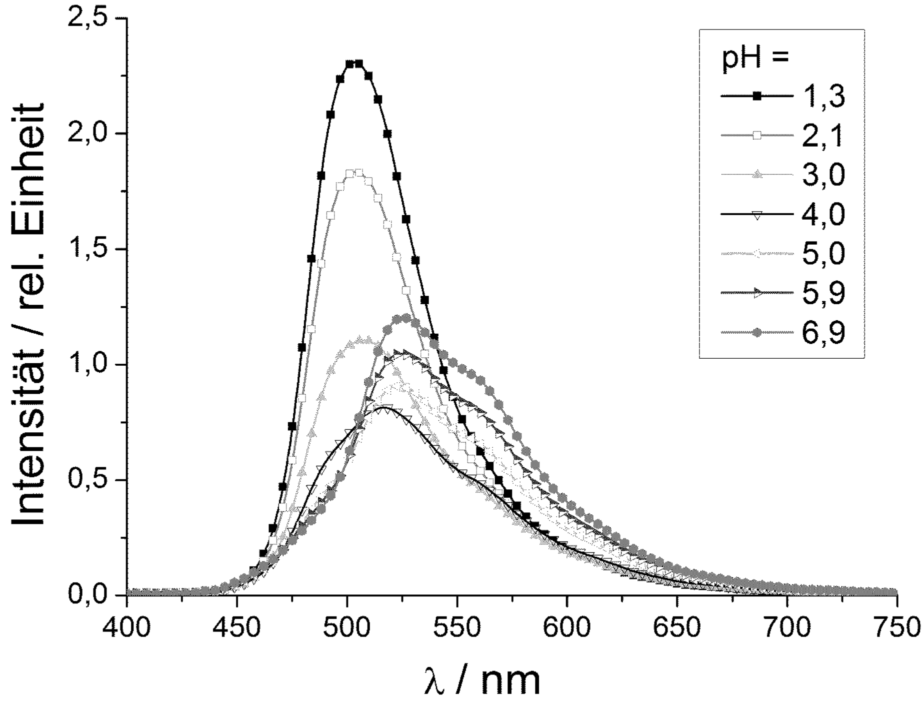


*Figur 5 B*

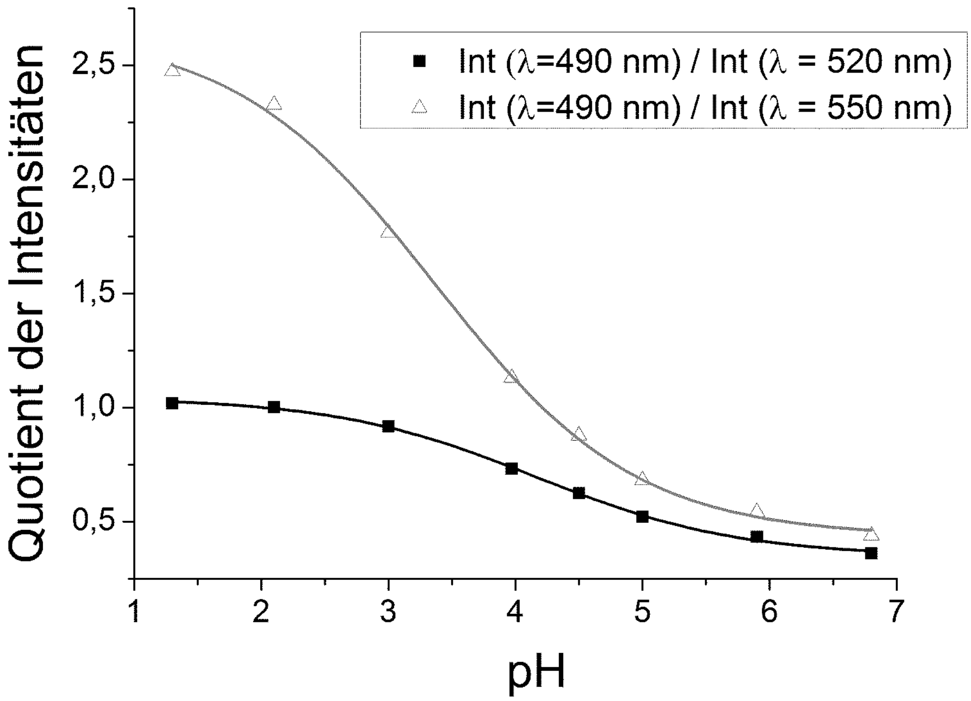

*Figur 6 A*

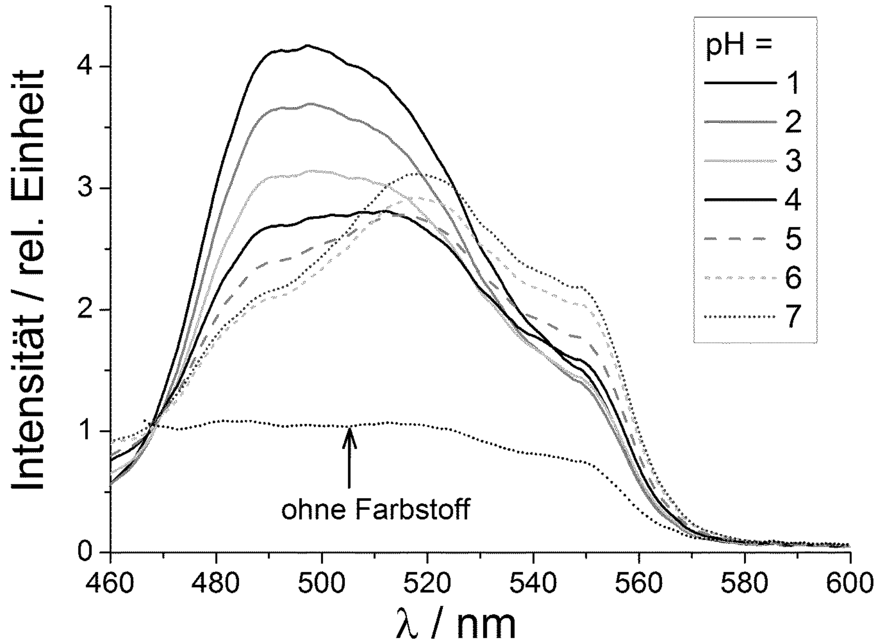


*Figur 6 B*

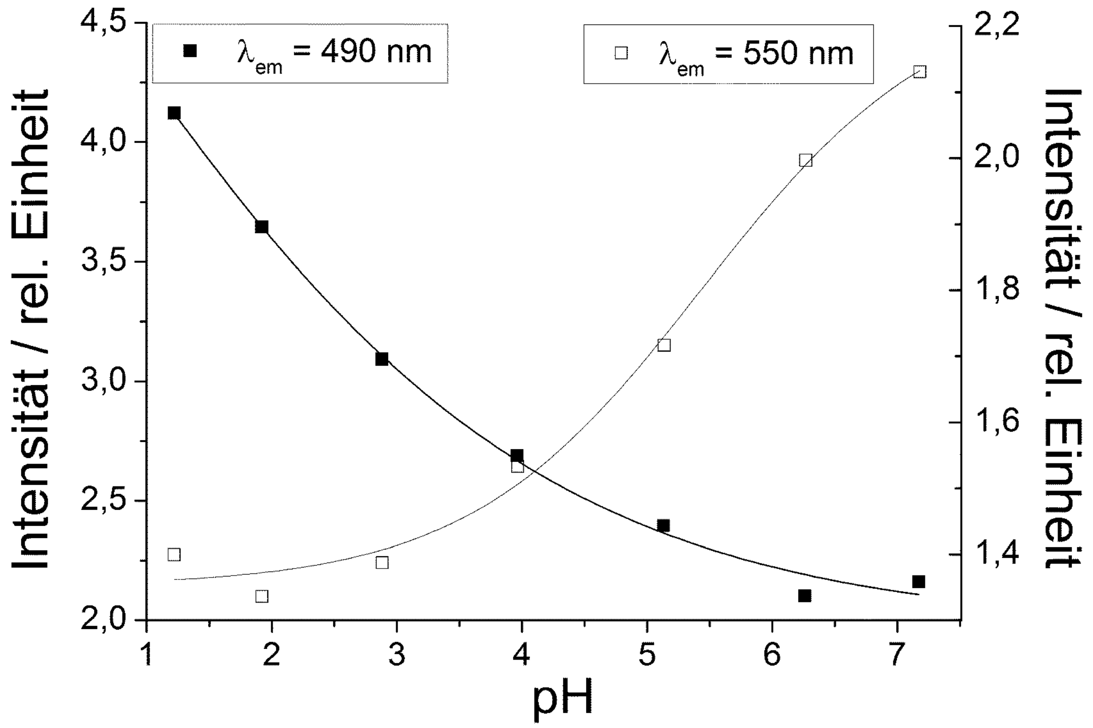

*Figur 7 A*

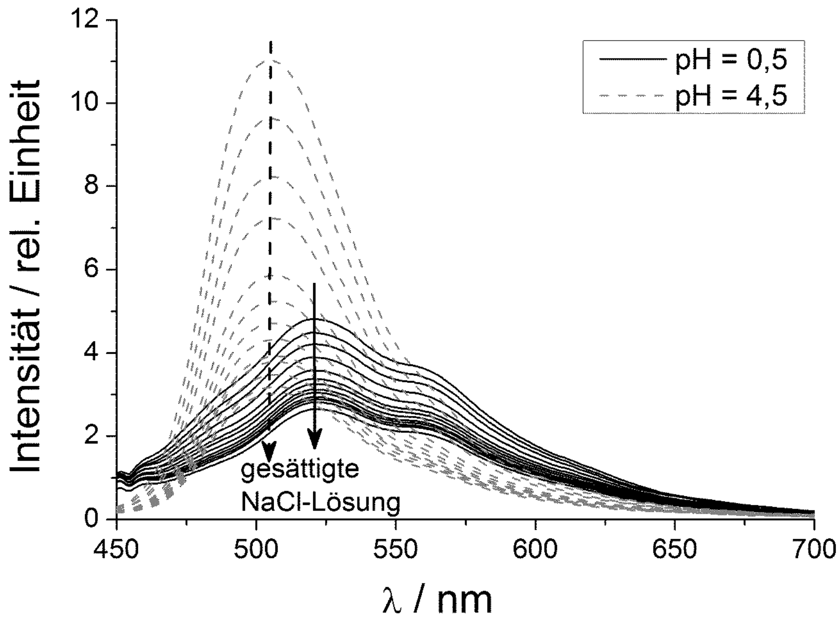


*Figur 7 B*

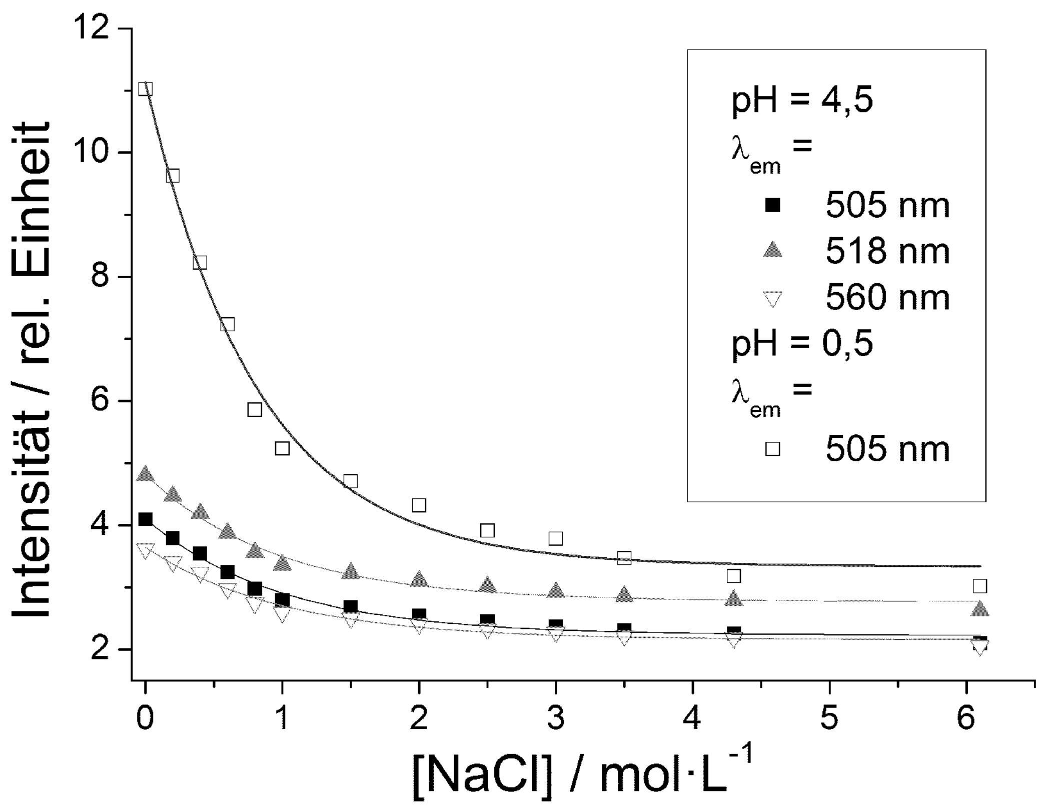

*Figur 8*

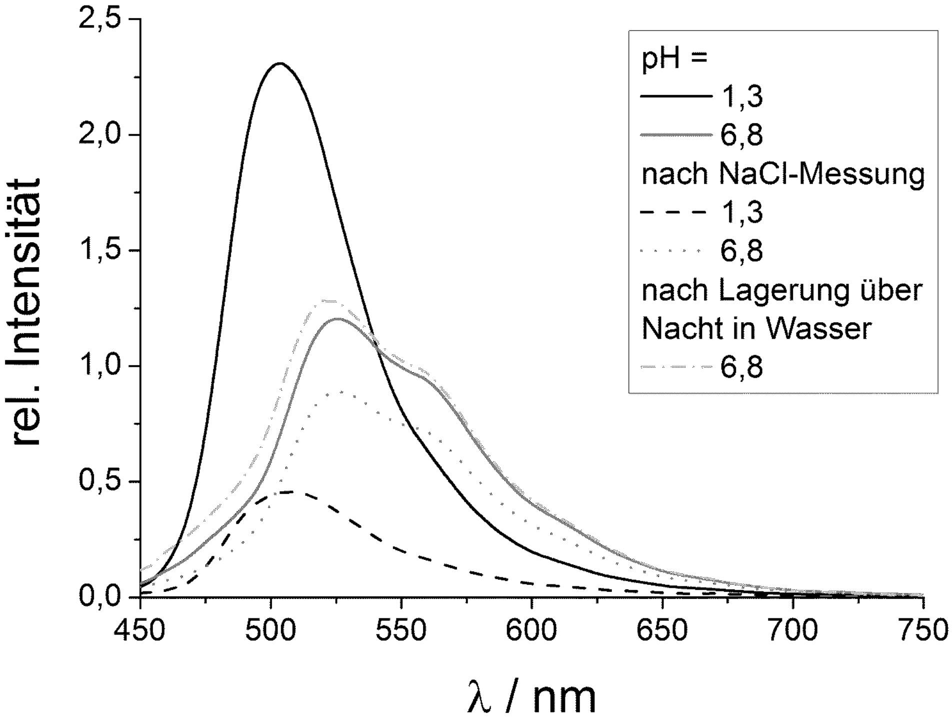


*Figur 9*

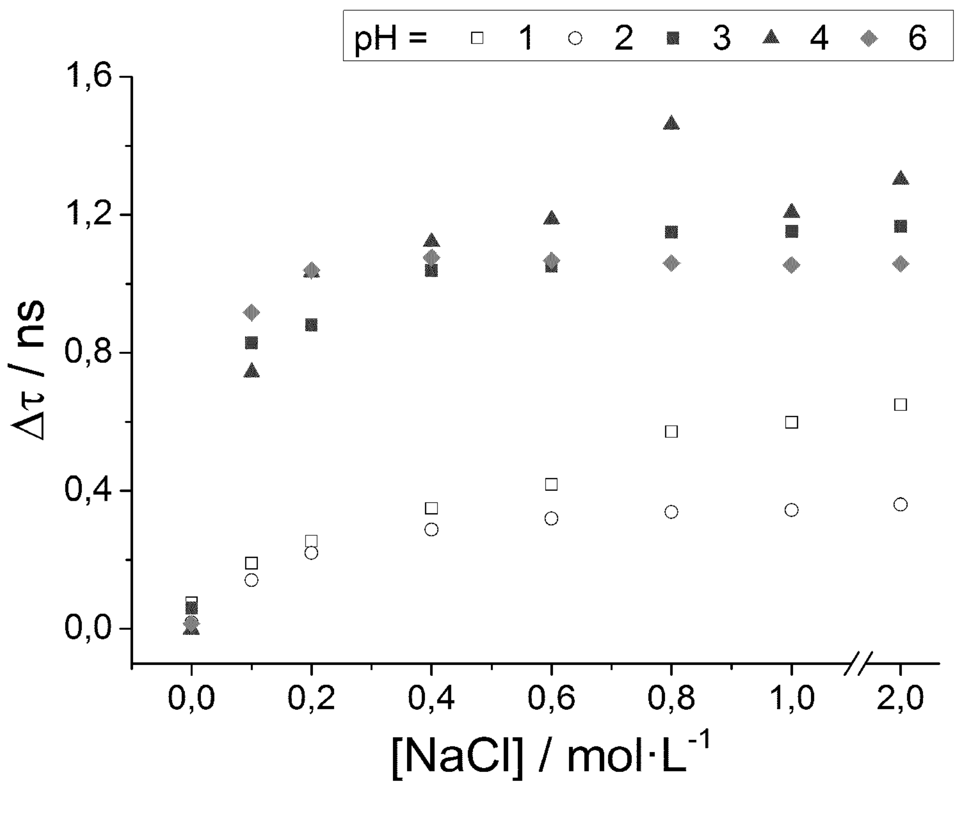

*Figur 10*

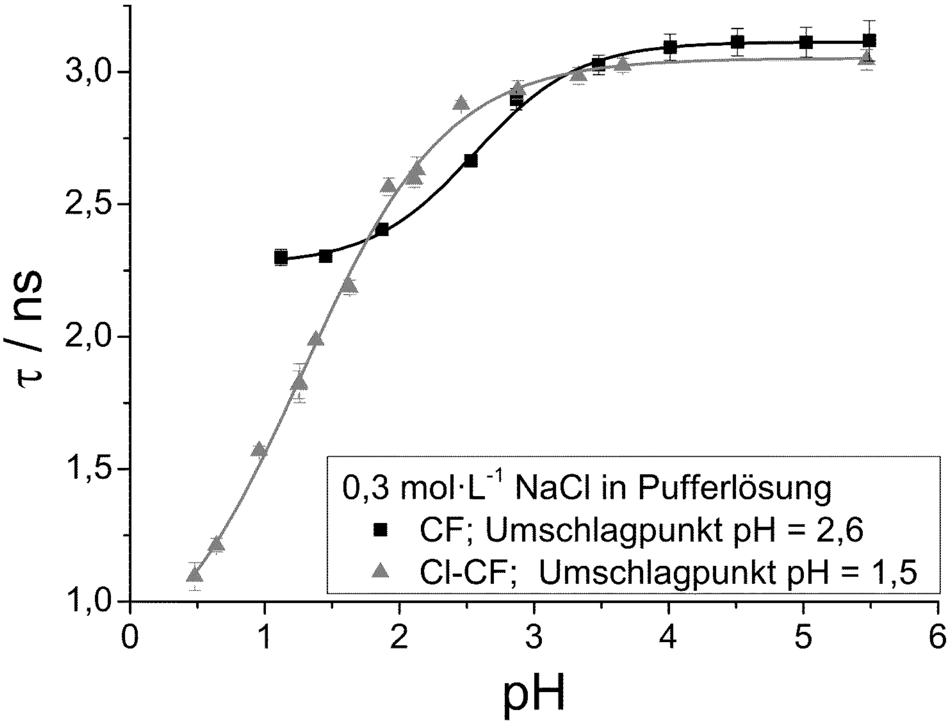


*Figur 11 A*

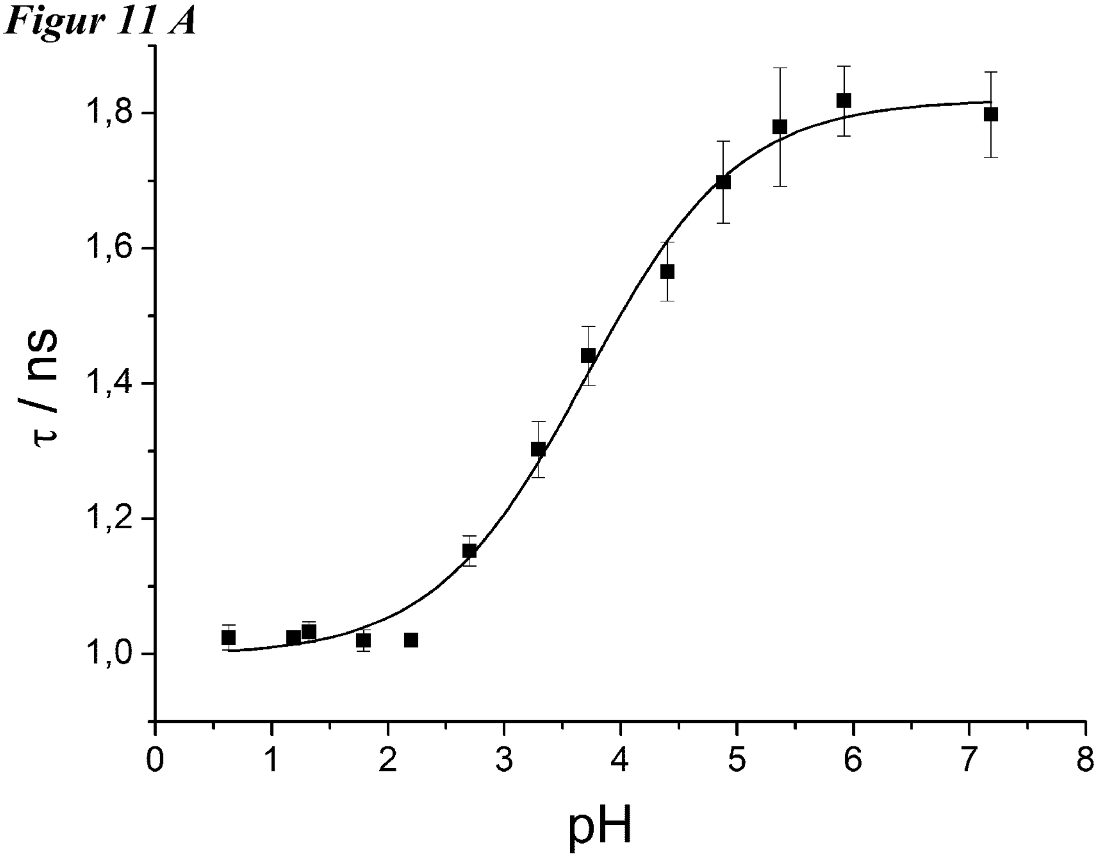

*Figur 11 B*

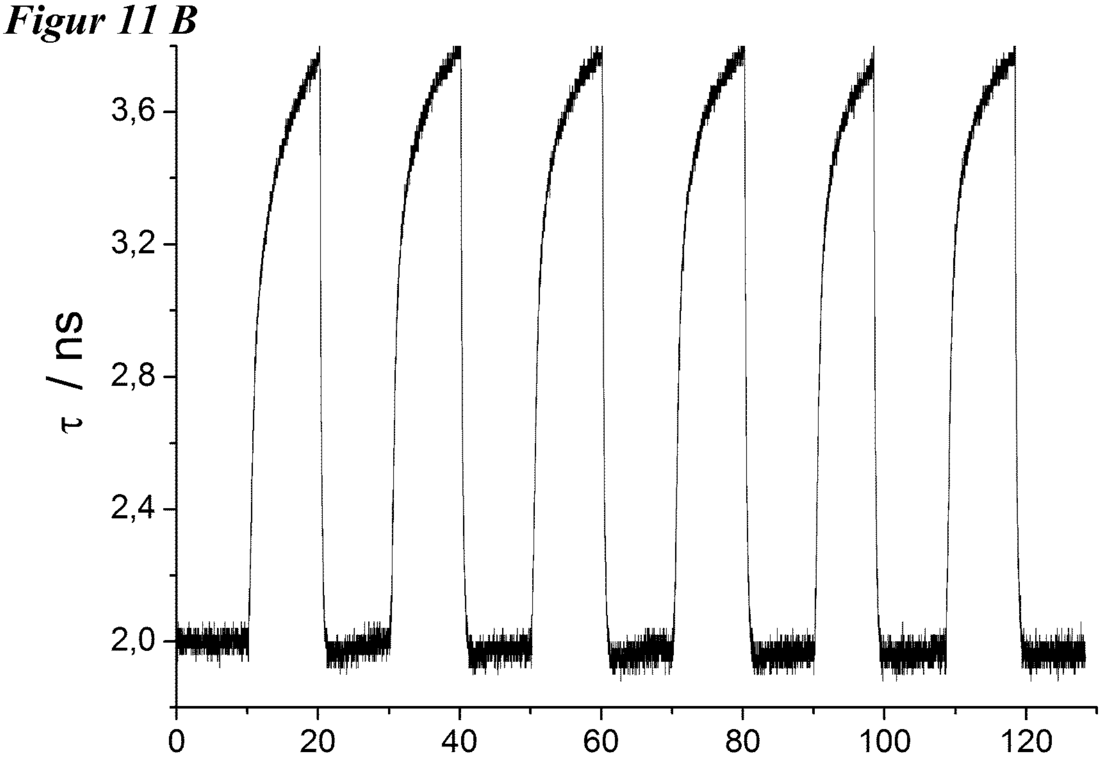


*Figur 12 A*

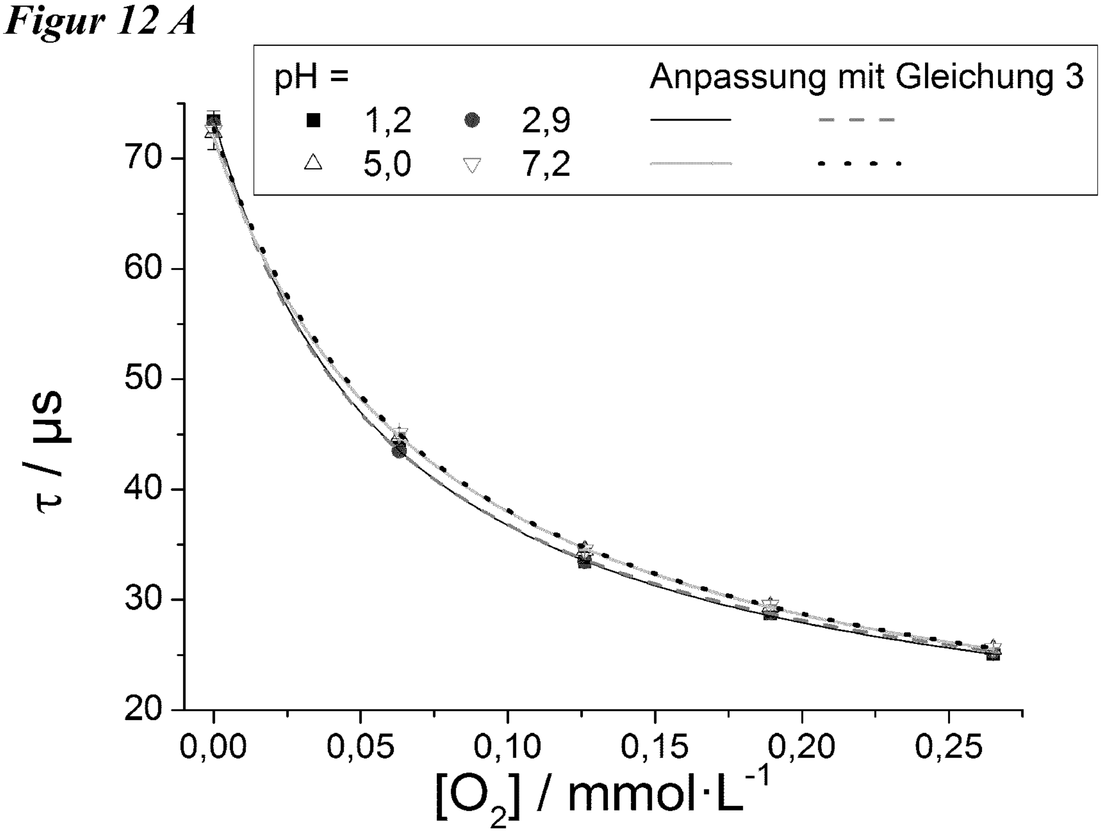

*Figur 12 B*

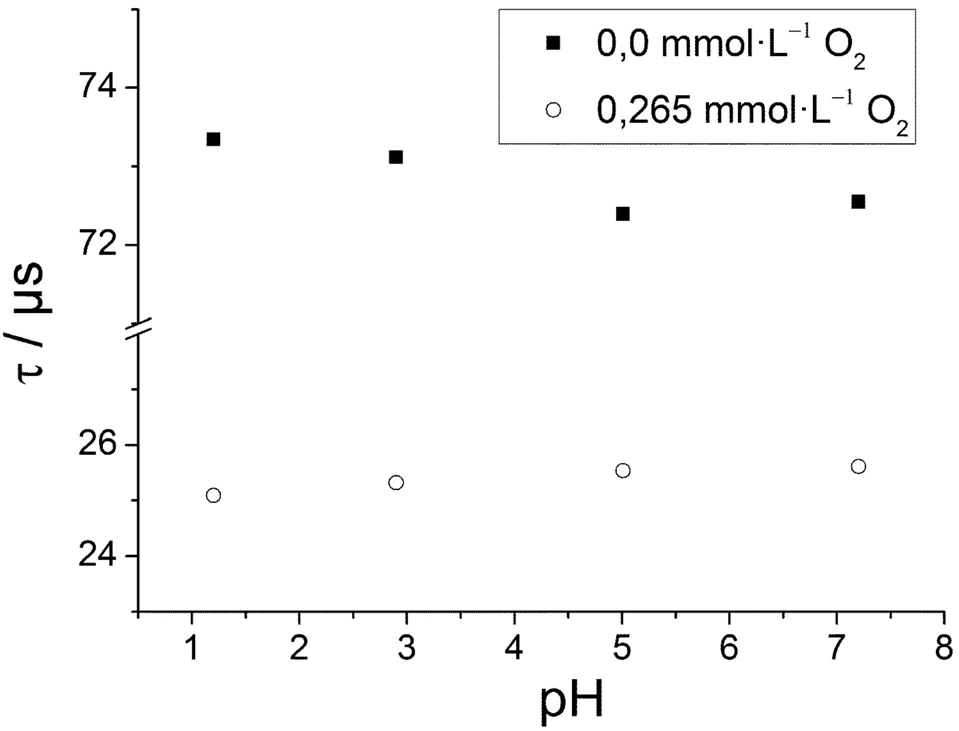


*Figur 13 A*

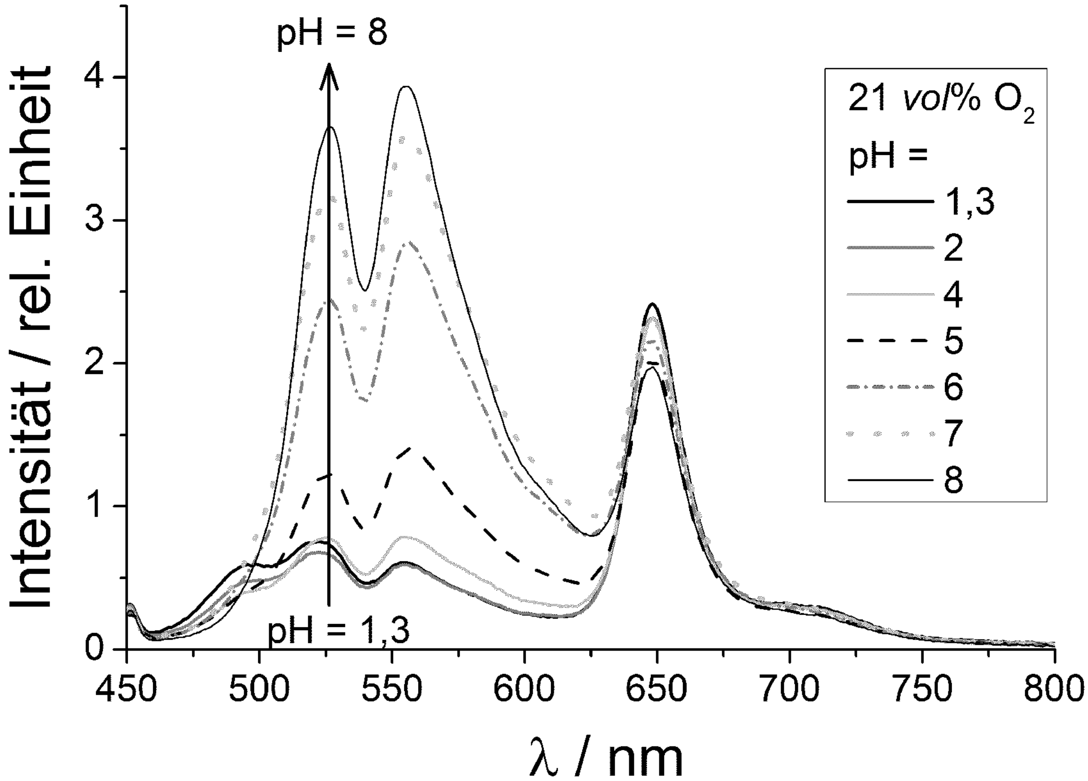

*Figur 13 B*

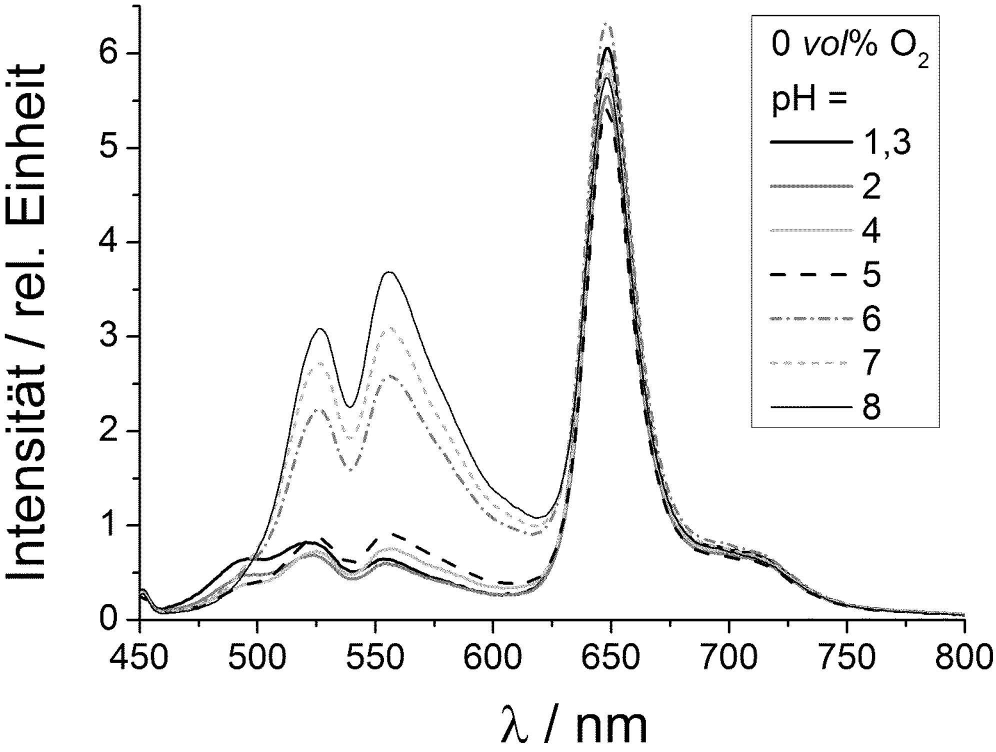


*Figur 14 A*

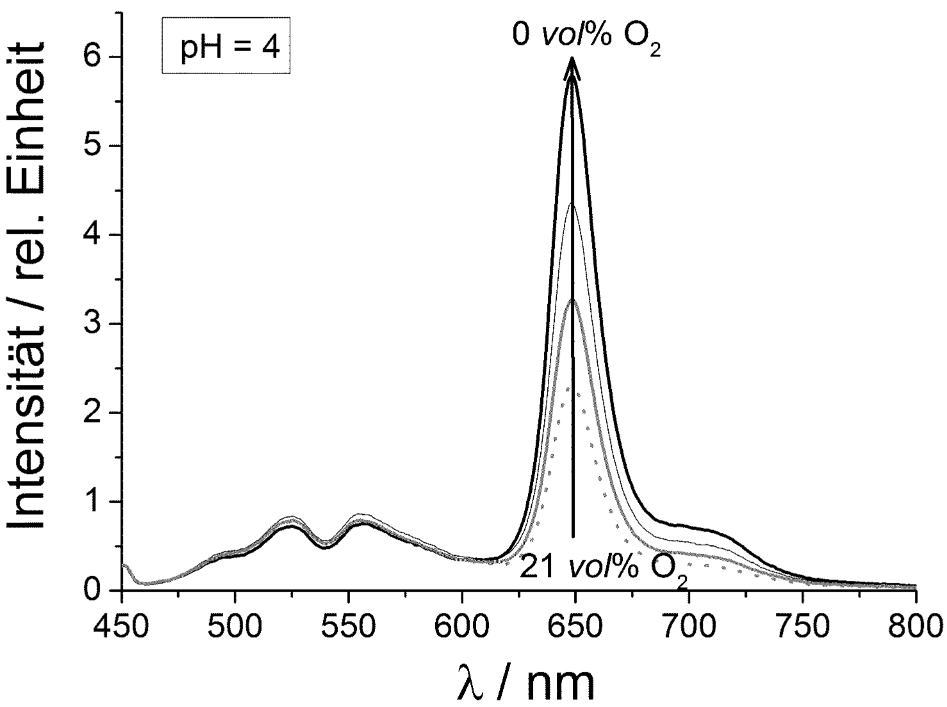

*Figur 14 B*

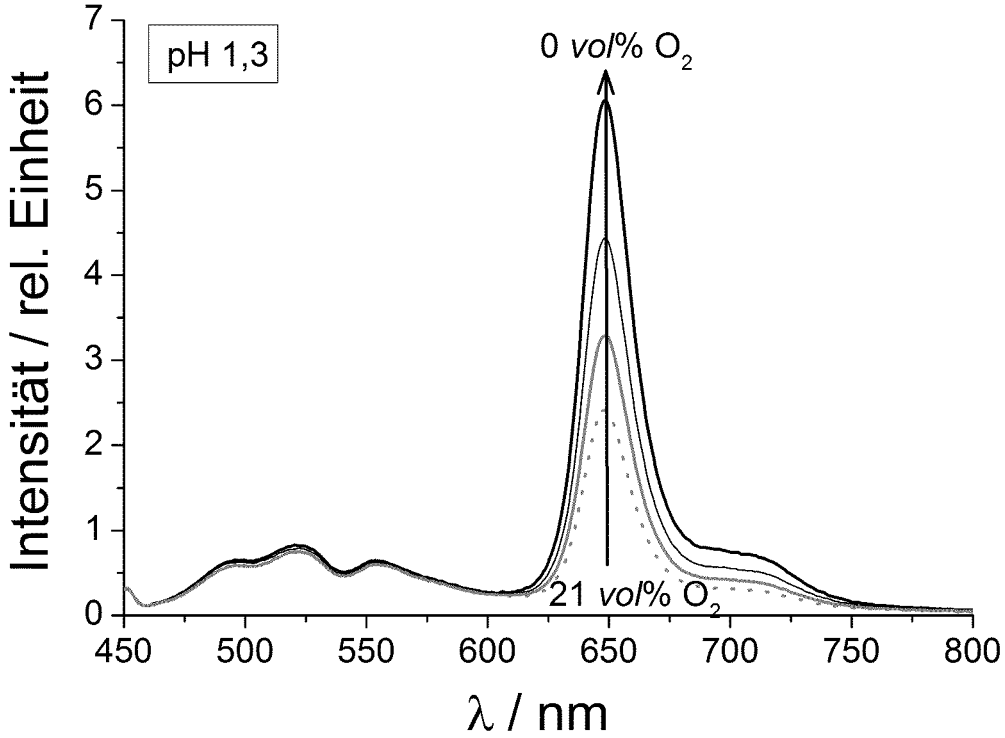


*Figur 15 A*

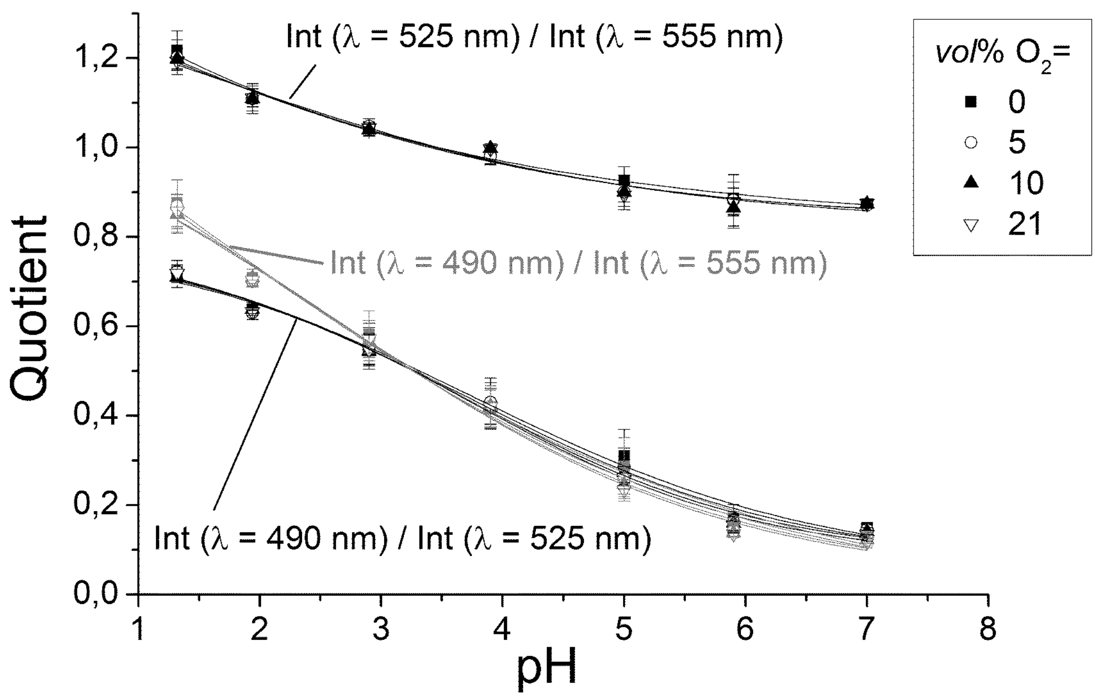

*Figur 15 B*

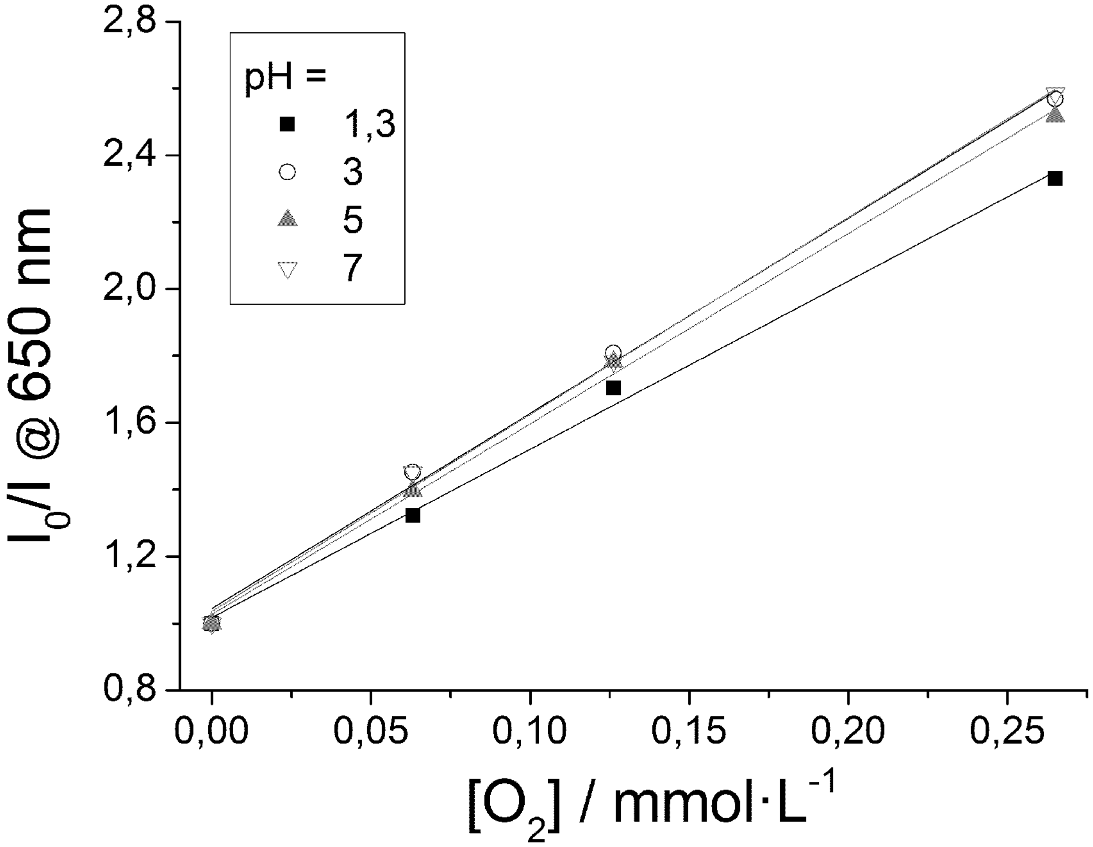


*Figur 16 A*

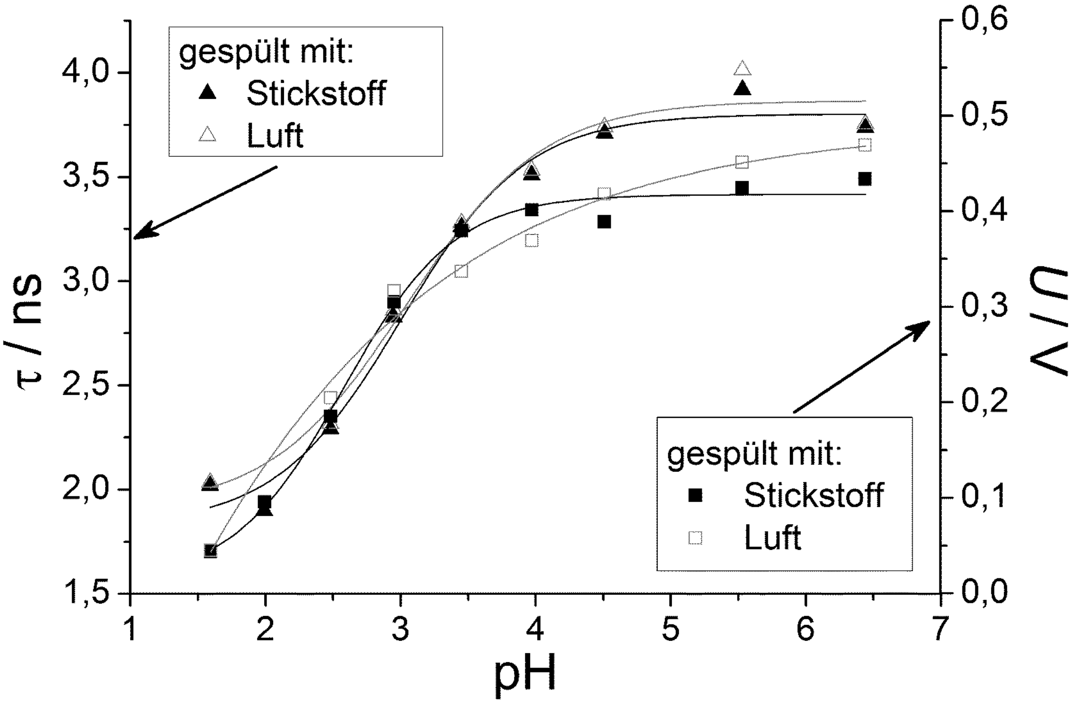

*Figur 16 B*

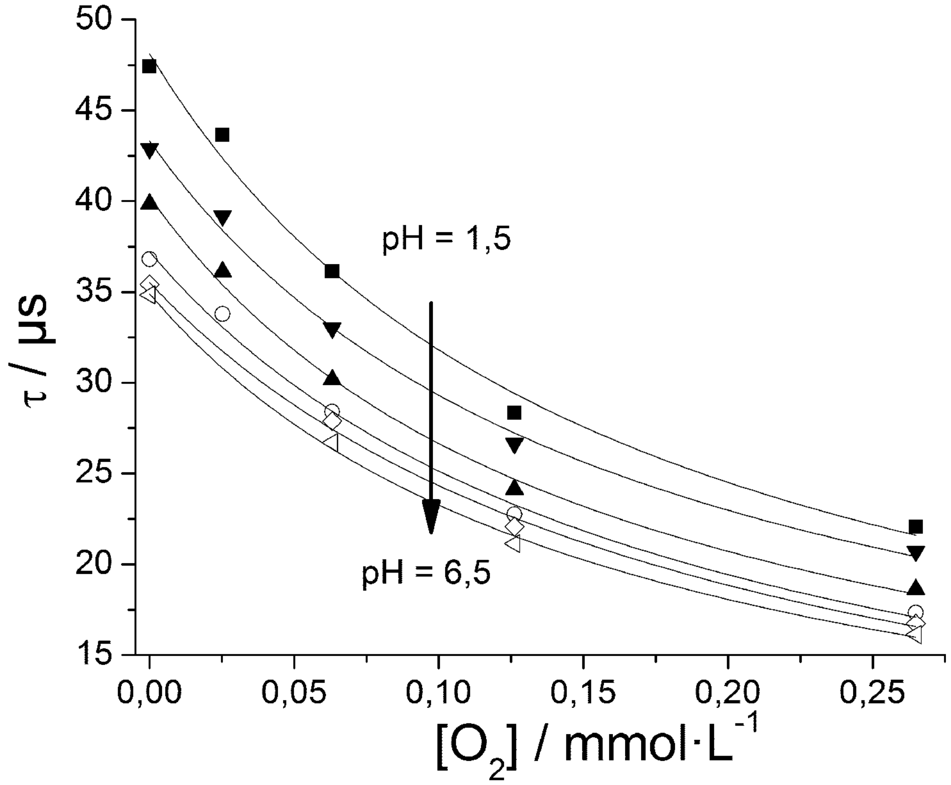


*Figur 17 A*

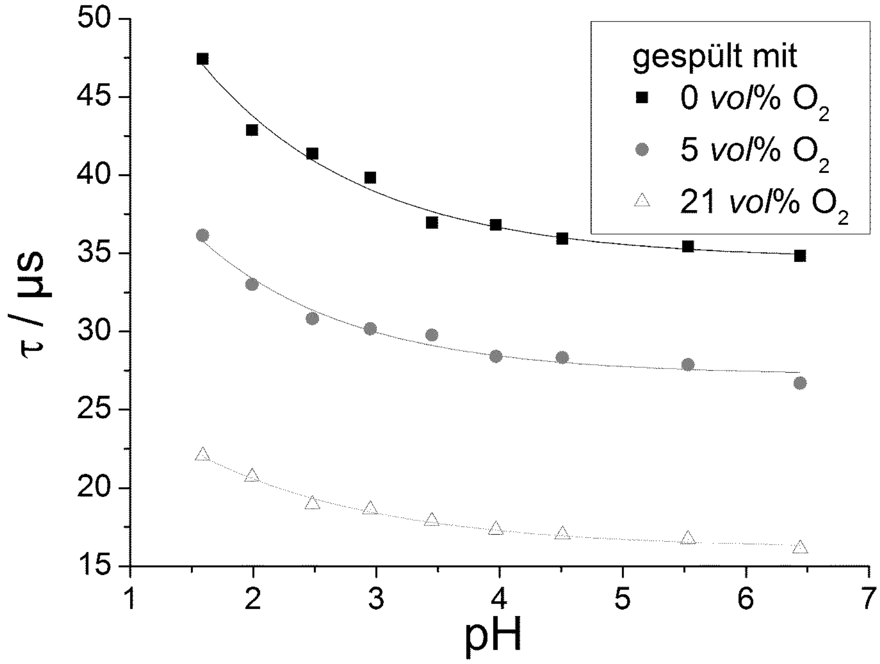

*Figur 17 B*

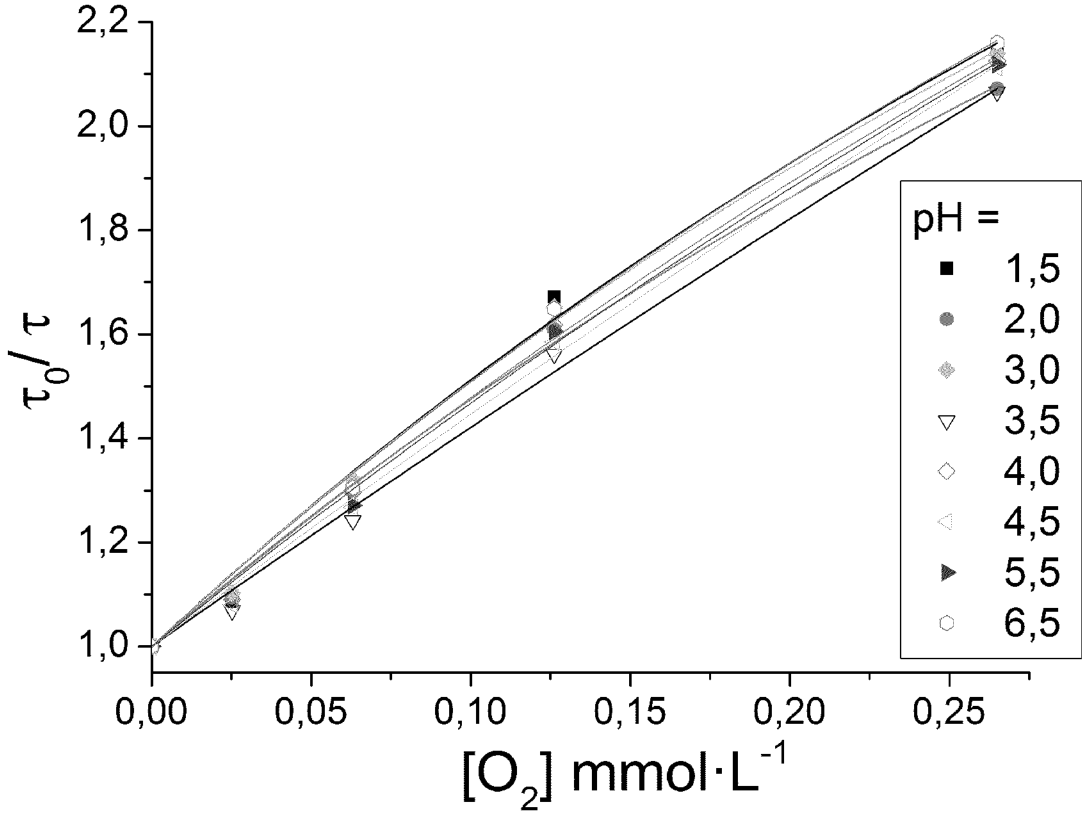


*Figur 18*

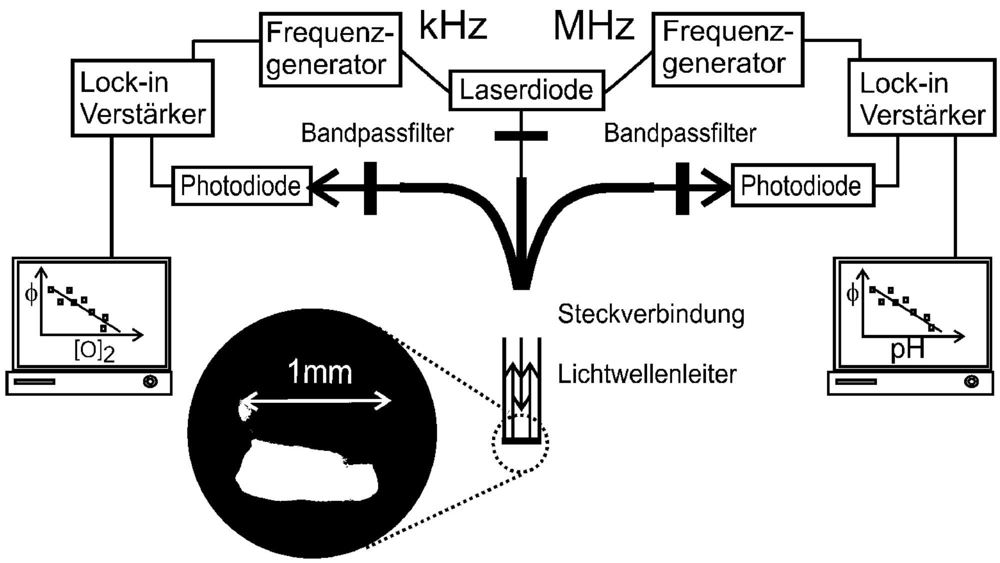

*Figur 19 A*

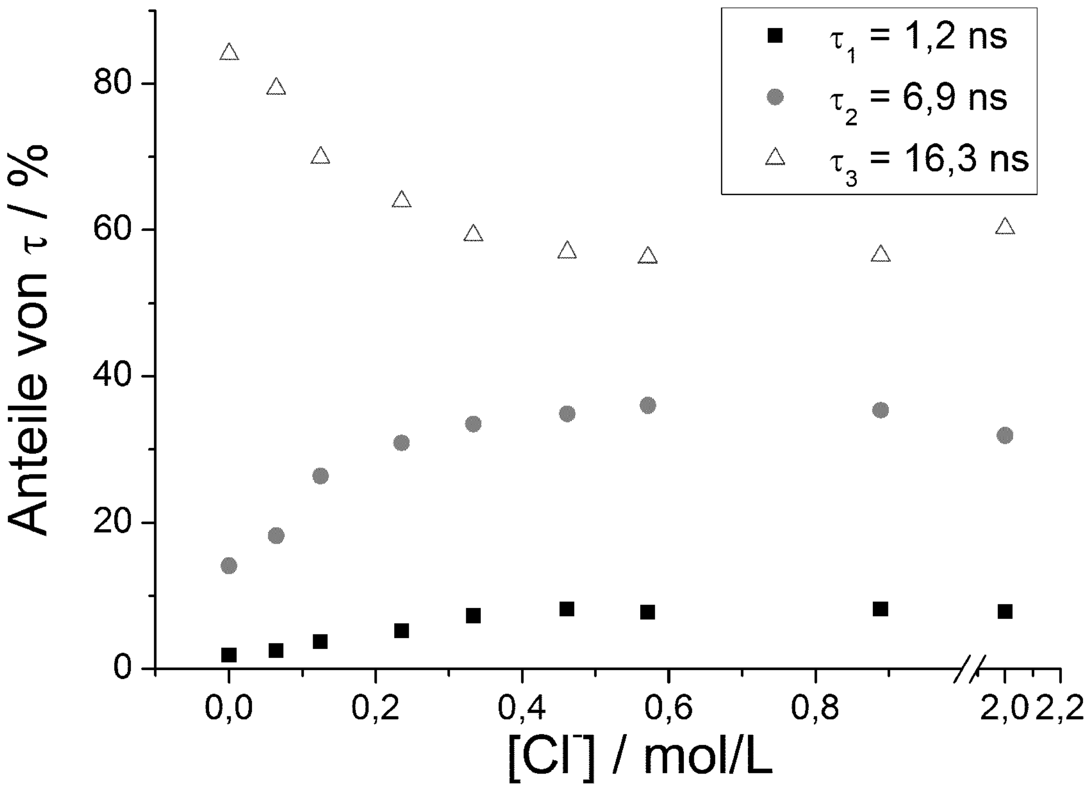


*Figur 19 B*

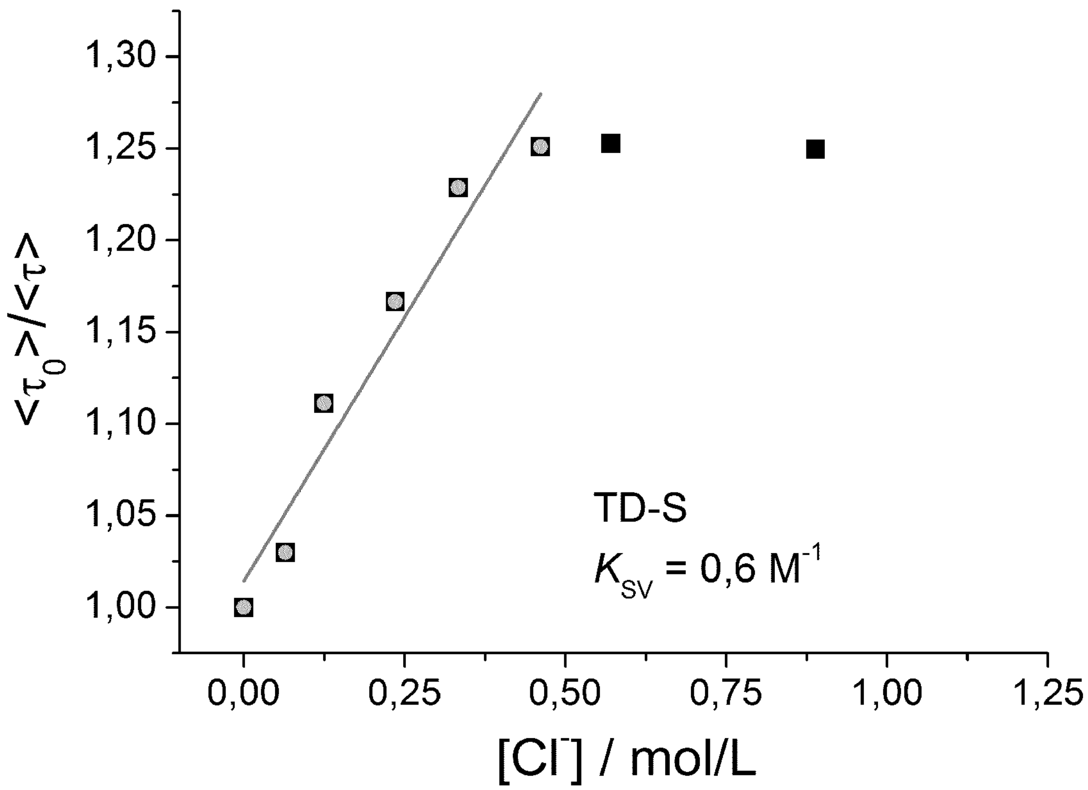

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0175450 A


### In der Beschreibung aufgeführte Nicht-Patentliteratur


- **S.R. GOLDSTEIN ; J. PETERSON ; R.V. FITZGERALD.** A miniature fiber optic pH sensor for physiological use. *Journal of Biomechanical Engineering,* 1980, vol. 102 (2), 141-146
- **PRESENS.** *Pyro Science und Colibri-Photonics,* 1997
- **N.B. BORCHERT ; G.V. PONOMAREV ; J.P. KERRY ; D.B. PAPKOVSKY.** O2/pH multisensor based on one phosphorescent dye. *Anal. Chem.,* 2011, vol. 83, 18-22
- **D.A. NIVENS et al.** Multilayer sol-gel membranes for optical sensing applications: single layer pH and dual layer CO2 and NH3 sensors. *Talanta,* 2002, vol. 58, 543-550
- **J. LIN.** Recent development and applications of optical and fiber-optic pH sensors. *Trends in analytical chemistry,* 2000, vol. 19, 541-551
- **C. HILLE et al.** Time-domain fluorescence lifetime imaging for intracellular pH sensing in living tissues. *Time-domain fluorescence lifetime imaging for intracellular pH sensing in living tissues*
- **H.-J. LIN et al.** Lifetime-based pH sensors: indicators for acidic environments. *Analytical Biochemistry,* 1999, vol. 269, 162-167
- **K.S. ROELOFS et al.** Behavior of sulfonated poly(ether ether ketone) in ethanol-water systems. *J. of Applied Polymer Science,* 2009, vol. 111, 2998-3009
- **K.S. ROELOFS et al.** Sulfonated poly(ether ether ketone)-based silica nanocomposite membranes for direct ethanol fuel cellls. *J. of Membrane Science,* 2010, vol. 346, 215-226
- **HUANG et al.** Sulfonation of Poly(Ether Ether Ketone) (PEEK): Kinetic Stdy and Characterization. *J. Applied Polymer Science,* 2001, vol. 82, 2651-2660
- **I. KLIMANT et al.** Fast response oxygen micro-optodes based on novel soluble ormosil glasses. *Mikrochim. Acta,* 1999, vol. 131, 35-46
- **SANDRA et al.** *Chem. Commun.,* 2011, vol. 47, 4685-4687
- **YOSHIKI et al.** für die Auswahl weiterer Calcium-sensitiver Farbstoffe. *Optical Review,* 2005, vol. 12 (5), 415-419
- **RAUSCHER ; VOIGT ; WILKE ; WILKE.** Chemische Tabellen und Rechentafeln für die analytische Praxis. VEB Deutscher Verlag für Grundstoffindustrie, 1977, vol. 6, 140-145
- **E. SCHMÄLZLIN et al.** An optical multifrequency phase modulation method using microbeads for measuring intracellular oxygen concentrations in plants. *Biophysical Journal,* 2005, vol. 89, 1339-1345
- **Y. CAI et al.** Data analysis and aging in phosphorescent oxygenbased sensors. *Sensors and Actuators B,* 2010, vol. 146, 14-22